# EUROPÄISCHE PATENTSCHRIFT

(11) **EP 0 319 921 B1**
(45) Veröffentlichungstag und Bekanntmachung des Hinweises auf die Patenterteilung: **05.06.1996**
(21) Anmeldenummer: 88120370.7
(22) Anmeldetag: 06.12.1988
(51) Int. Cl.: B65H 27/00

(54) **Vorrichtung zum Führen eines bombierten Bandes**
Device for guiding a curved web
Dispositif de guidage d'une bande de forme bombée

(30) Priorität: 07.12.1987 DE 3741403; 15.11.1988 DE 3838724
(43) Veröffentlichungstag der Anmeldung: 14.06.1989
(73) Patentinhaber: Schmid, Hans Armin, Dr., D-81675 München (DE)
(72) Erfinder: Schmid, Hans Armin, Dr., D-81675 München (DE)
(74) Vertreter: Strasser, Wolfgang, Dipl.-Phys

(56) Entgegenhaltungen:
- WO-A-88/08620
- CH-A- 279 337
- DE-A- 2 358 135
- US-A- 3 144 104
- US-A- 3 319 987

## Beschreibung

Die Erfindung betrifft eine Vorrichtung zum Führen eines aus einem steifen Material bestehenden bombierten Bandes gemaß dem Oberbegriff von Anspruch 1.

Eine solche Vorrichtung ist beispielsweise aus der US-A-3,144,104 bekannt. Sie besteht im wesentlichen aus einer zylindrischen Trommel, deren Mantelfläche die Anlagefläche für die innerste Lage des auf diese Trommel aufgewickelten Bandes bildet, während für die äußeren Bandlagen die Außenseite der jeweils nächstinneren Bandlage als Anlagefläche dient. Jedes der beiden axialen Stirnenden der Trommel ist mit einem kreisscheibenförmigen Flansch versehen, dessen Durchmesser ein Mehrfaches des Trommeldurchmessers beträgt. Die aufeinander zuweisenden Innenflächen der beiden Flansche sind gegen das Lot zur Trommelachse nach innen geneigt, so daß diese als Abstützflächen dienenden Innenflächen zwischen sich einen sich radial nach außen konisch verjüngenden Zwischenraum einschließen. In axialer Richtung sind die Flansche so dünn ausgebildet, daß sie eine hohe Flexibilität aufweisen und sich mit ihren radialen Außenrändern voneinander weg bzw. aufeinander zu bewegen, wenn immer mehr Lagen des bombierten Bandes auf- bzw. abgewickelt werben. Da das bombierte Band über seine gesamte Länge die gleiche Breite besitzt, steht immer nur die äußerste aufgewickelte Lage des Bandes mit den beiden Flanschen in einem nahezu punktförmigen Eingriff, der lediglich dazu dient, ein nicht tangentiales Abwickeln des bombierten Bandes zu verhindern. Die Zuordnung zwischen dem bombierten Band und der jeweiligen Abstützfläche ist so gewählt, daß die breite Seitenfläche des bombierten Bandes, die im abgewickelten Zustand längsgewölbt konvex geformt ist, im aufgewickelten Zustand eine quergerichtete, konkave Wölbung besitzt. Dies führt dazu, daß Bandabschnitte im Übergangsbereich mit ihren schmalen Seitenflächen an den beiden Flanschen reibend in radialer Richtung entlanggleiten, wenn das Band auf- oder abgewickelt wird. Um das Band in definierter Weise auf die Trommel auf- bzw. von dieser abwickeln zu können, ist vor der Mantelfläche der Trommel eine Anordnung von Klemm- und Führungsrollen vorgesehen, die gegen die Breitseiten des Bandes angedrückt sind und verhindern, daß sich das Band beim Auf- oder Abwickeln um seine Längsachse verkippt bzw. nach hinten ausbeult, wenn der von der Trommel abgewickelte Teil des Bandes in Band-Längsrichtung zur Wickeltrommel hin einer Druckbelastung ausgesetzt wird. Letzteres gilt auch für die aus US-A-3,243,132 bekannte Vorrichtung.

Mit diesen bekannten Anordnungen ist jedoch eine exakt definierte, d.h. schlupffreie Umsetzung der Drehbewegung der Trommel in eine Linearbewegung des "freien", d.h. nicht an der Trommel befestigten Endes des bombierten Bandes oder umgekehrt nicht erzielbar. Darüber hinaus treten an den Klemm- und Führungswalzen Reibungsverluste auf, die bei vielen praktischen Anwendungsfällen stören.

Demgegenüber liegt der Erfindung die Aufgabe zugrunde, eine Vorrichtung der eingangs genannten Art zu schaffen, mit deren Hilfe ein bombiertes Band, das sich zumindest abschnittsweise bezüglich der Führungsvorrichtung bewegt, an dieser Vorrichtung spiel- und schlupffrei so abgestützt, gehalten und geführt werden kann, daß es in Längsrichtung zur Führungsvorrichtung hin druckbelastbar ist und keine nennenswerten Reibungsverluste auftreten.

Zur Lösung dieser Aufgabe sieht die Erfindung die im Anspruch 1 niedergelegten Merkmale vor.

Diesen Maßnahmen liegt folgende Erkenntnis zugrunde: Ein in Querrichtung bombiertes Band ist dann, wenn man es sich selbst überläßt, um eine zu seiner Längsrichtung parallele Achse gewölbt. Um die folgende Erläuterung zu vereinfachen, sollen der Scheitel dieser Wölbung als "oben" liegend und die Bandränder demgegenüber als "unten" liegend bezeichnet werden, obwohl natürlich auch jede andere Orientierung im Raum möglich ist und zu denselben Ergebnissen führt.

Wölbt man nun einen Abschnitt eines solchen Bandes um eine quer zu seiner Längsrichtung verlaufende Achse, wie dies beim Anlegen eines Bandabschnittes an eine entsprechende Anlagefläche zwangsweise geschieht, so erfährt dieser Abschnitt eine Breitenvergrößerung, weil die Querwölbung flachgedrückt wird. Hierdurch bewegen sich die Seitenränder dieses Bandabschnittes voneinander weg nach außen und überdies relativ zur Tangentialebene an den Wölbungsscheitel nach "oben". Diese zur Seite hin und nach "oben" erfolgende Bewegung der Bandränder wird erfindungsgemäß ausgenützt, um wenigstens einen der Seitenränder des jeweiligen Bandabschnittes mit an der Führungsvorrichtung vorgesehenen seitlichen Abstützflächen so in Eingriff zu bringen, daß der Bandabschnitt zwischen diesen Abstützflächen und der Anlagefläche elastisch eingespannt wird.

Ein wesentlicher Vorteil der erfindungsgemäßen Anordnung besteht darin, daß die Übergänge vom nichteingespannten in den eingespannten Zustand und umgekehrt in Form von Wälzvorgängen erfolgen, bei denen sich die betreffenden Bandflächen an die Anlage- und Abstützflächen reibungs- und schlupffrei anlegen bzw. von diesen abheben. Es muß also lediglich die zur elastischen Verformung des Bandes erforderliche Energie aufgewendet werden, die aber bei Umkehrung des betreffenden Vorgangs praktisch wieder vollständig frei wird, da sich für bombierte Bänder Materialien mit äußerst geringer elastischer Hysterese verwenden lassen. Da die erfindungsgemäß vorgesehenen seitlichen Abstützflächen immer nur mit den Randbereichen der Bandabschnitte in Eingriff treten, bleiben die Flachseiten des Bandes frei zugänglich ohne durch irgendwelche Walzenanordnungen abgedeckt zu werden.

Beim oben genannten Stand der Technik ist die Anlagefläche die Mantelfläche eines kreiszylindrischen, drehbar gelagerten Rotationskörpers, auf den die Bandabschnitte aufgewickelt bzw. von dem sie abgewickelt werden können. Die erfindungsgemäße Vorrichtung kann in entsprechender Weise ausgebildet sein, ist aber hierauf nicht beschränkt. Die Anlagefläche einer erfindungsgemäßen Vorrichtung muß nicht rotationssymmetrisch sein. Sie muß lediglich um wenigstens eine quer zur Bandlängsrichtung verlaufende Achse gekrümmt bzw. gewölbt sein. Dabei kann sich der Krümmungsradius der Anlagefläche in Band-Längsrichtung ändern und es können abwechselnd konvex und konkav gekrümmte Abschnitte aufeinanderfolgen. Wesentlich ist lediglich, daß das Band beim Anschmiegen an die verschiedenen Abschnitte der Anlagefläche jeweils seine Querkrümmung zumindest teilweise verliert, so daß die zum Einspannen zwischen der Anlagefläche und den seitlichen Abstützflächen erforderliche Breitenvergrößerung eintritt.

Die seitlichen Abstützflächen können so weit voneinander beabstandet angeordnet sein, daß ein noch in Querrichtung gekrümmter Bandabschnitt bequem zwischen sie eintreten kann, um sich dann bei der nachfolgenden Breitenvergrößerung mit der einen Seitenfläche an eine Abstützfläche und mit der anderen Seitenfläche an die andere Abstützfläche anzulegen.

Um eine optimale Anlage der aufgewickelten Bandabschnitte an der jeweils darunter befindlichen Anlagefläche zu erreichen werden die Band-Seitenflächen vorzugsweise so ausgebildet, daß beim Einspannvorgang zuerst der Bereich jeder Band-Seitenfläche, der sich ausgehend von der Mitte der Banddicke zu der näher bei der Querachse liegenden Band-Unterseite erstreckt, mit der zugehörigen Abstützfläche in Eingriff tritt. Dies kann entweder dadurch geschehen, die Band-Seitenflächen entsprechend abgeschrägt werden oder daß sie nicht als ebene Flächen sondern so ausgebildet werden, daß sie in dem zwischen der Banddickenmitte und der Bandunterseite liegenden Bereich einen seitlich vorstehenden Wulst oder dergleichen aufweisen.

Bei einer anderen Variante kann einer der Band-Seitenränder eine der Krümmung der Querwölbung entgegengekrümmte Aufbiegung aufweisen, die bei der elastischen Verringerung der Querkrümmung des Bandabschnittes erhalten bleibt. In diesem Fall können dann die beiden seitlichen Abstützflächen und die Anlagefläche im Bereich dieses Band-Seitenrandes so angeordnet sein, daß sie die Begrenzungsflächen einer Führungsrille bilden, in die sich der an die Aufbiegung nach außen hin anschließende Randbereich beim elastischen Verringern der Querwölbung des Bandes hineinbewegt, um sich dort einzuspannen.

Eine drehbare Lagerung des die Anlage- und seitlichen Abstützflächen tragenden Körpers ist bei vielen Anwendungsfällen vorteilhaft.

In jedem Fall ergibt sich eine Anordnung, bei der ein oder mehrere Bänder an eine mit den erfindungsgemäßen Flächen versehene Führungsvorrichtung angelegt, um diese herum geführt oder auf sie auf- bzw. von ihr abgewickelt werden können, wobei sie mit dieser Führungsvorrichtung jeweils bis an die Grenze der Materialelastizität druck- und zugsteif verbunden sind.

Bei einer bevorzugten Verwendungsmöglichkeit kommt die erfindungsgemäße Vorrichtung als Umlenkrolle zum Einsatz. In diesem Fall wird die Führungsvorrichtung im allgemeinen als Rotationskörper in Form eines geraden Kreiszylinders ausgebildet, der um eine mit seiner Zylinderachse zusammenfallende Achse drehbar gelagert ist. Eine in der Mantelfläche des Rotationskörpers vorgesehen Vertiefung wird dann vorzugsweise als Nut ausgebildet, die sich um den gesamten Umfang des Kreiszylinders herum erstreckt. Auch die im Inneren der Nut angeordnete Anlagefläche wird in diesem Fall vorzugsweise als Mantelfläche eines geraden Kreiszylinders ausgebildet, dessen Achse mit der Drehachse des Rotationskörpers zusammenfällt. Das Band taucht immer nur mit einem vergleichsweise kurzen Abschnitt seiner Länge in die Nut ein und seine beiden Enden können als "freie" Enden verwendet werden, wobei mit jedem dieser Enden ein im allgemeinen längs einer vorgebbaren Bahn geführter Körper verbunden ist, dessen Bewegung mit der Bewegung des mit dem jeweils anderen Ende verbundenen Körpers gekoppelt werden soll.

Alternativ hierzu können auch die beiden "freien" Bandenden miteinander verbunden und um eine oder mehrere weitere Umlenkrollen herumgeführt werden, die entweder als einfache Rollen oder als Rotationskörper der eben beschriebenen Art aufgebaut sind. Diese Ausführungsform, bei der das Band als "Endlosband" um zwei oder mehr Umlenkrollen umläuft, kann entweder als Fahrwerk eines Raupenfahrzeuges oder als Riemen-Getriebe verwendet werden, bei dem die Drehzahlverhältnisse der einzelnen Umlenkrollen in bekannter Weise von den Verhältnissen ihrer Umfangslängen abhängen. Entscheidend neu im Vergleich zu bekannten Riemen-Getrieben ist hierbei, daß die Verbindung zwischen dem umlaufenden bombierten Band und zumindest den Umlenkrollen, die als erfindungsgemäße Führungsvorrichtung ausgebildet sind, extrem schlupf- und spielfrei ist, daß nur äußerst geringe Reibungskräfte beim Einspannen der jeweiligen Bandabschnitte zwischen die Anlage- und Abstützflächen, beim Umlaufen um die mit diesen Flächen versehenen Rollen und beim Abheben von ihnen entstehen. Dabei kann die Anordnung in Richtung der durch das umlaufende Band gegebenen Verbindungslinien zumindest zwischen den Umlenkrollen auf Druck belastet werden, die als erfindungsgemäße Führungsvorrichtung ausgebildet sind.

Auch die Ausführungsform, bei der jedes der beiden "freien" Enden des bombierten Bandes mit einem in irgendeiner vorgebbaren Weise geführten Körper verbunden ist, kann als Getriebe verwendet werden, wenn die Führungsvorrichtung auf ihrer Rotationsachse nicht einfach als Umlenkrolle frei drehbar gelagert sondern mit einem beliebig ausgebildeten Antriebsmotor verbunden ist, dessen Drehbewegung in die miteinander gekoppelten translatorischen Bewegungen der mit den "freien" Enden verbundenen Körper umgesetzt werden soll. Umgekehrt kann auch die Bewegung dieser Körper in eine Drehbewegung umgesetzt werden, die an der Führungsvorrichtung bzw. einer mit ihr drehfest verbundenen Achse abgegriffen wird.

Bei einer weiteren als Getriebe verwendbaren Ausführungsform ist eines der beiden Bandenden fest mit der als Wickelkörper ausgebildeten Führungsvorrichtung verbunden, während das andere, "freie" Ende mit einem irgendwie geführten Körper in Verbindung steht. Bei dieser Ausführungsform, bei der es auch zu einer mehrfachen Aufwicklung des Bandes auf den Wickelkörper kommen kann, wird die Bewegung des mit dem "freien" Ende verbundenen Körpers mit der Drehbewegung des Wickelkörpers in einer extrem schlupf- und spielfreien Weise gekoppelt. Bei der Mehrzahl der derartigen Anwendungsfälle wird der Wickelkörper wieder als gerader Kreiszylinder ausgebildet sein. Es sind hier aber auch andere Formen denkbar. Letzteres gilt insbesondere für die Ausbildung der Anlagefläche, die dann, wenn eine Mehrfachaufwickelung des Bandes vorgesehen ist, vorzugsweise nicht als gerader Kreiszylinder sondern als gerader Spiralzylinder ausgebildet wird. Begrenzt man die Mantelfläche eines solchen geraden Spiralzylinders auf einen Umfangswinkel von 360°, wie dies bei einem massiv aufgebauten Winkelkörper notwendigerweise der Fall ist, so weist eine derartige Anlagefläche einer Stelle eine Unstetigkeitsstelle in Form einer radialen Stufe auf, deren Höhe vorzugsweise gleich der Dicke des verwendeten bombierten Bandes ist. Das am Wickelkörper befestigte Ende des Bandes wird dann in der Nut so angeordnet, daß es unmittelbar an die Stufe anschließt, wodurch die radial außenliegende Oberfläche dieses Band-Endbereiches die durch den Wickelkörper selbst direkt vorgegebene, an der Mantelflächen-Stufe eigentlich abbrechende Anlagefläche kontinuierlich fortsetzt. Durch diese Maßnahme ergibt sich ein stetiger Zusammenhang zwischen der Bewegung des "freien" Bandendes und dem durchlaufenen Drehwinkel des Wickelkörpers.

Alternativ können die Anlagefläche bzw. die Anlageflächen auch so ausgebildet sein, daß aufgewickelte bzw. an diese Flächen angeschmiegte Bandabschnitte zumindest einen Teil der Mantelfläche eines schiefen Kreiszylinders, eines Zylinders mit einer anderen Querschnittsform, eines Kegelstumpfes oder einer im Querschnitt tonnen- oder kissenförmigen Fläche bilden.

Ein dritter bevorzugter Anwendungsfall ist die Verwendung einer erfindungsgemäßen Vorrichtung als Gelenk, wobei wieder ein Bandende an einem Wickelkörper befestigt ist oder beide Bandenden als "freie" Enden Verwendung finden. Im ersten Fall können nur zwei Körper miteinander gelenkig verbunden werden, von denen der eine mit dem Wickelkörper und der andere mit dem "freien" Bandende fest verbunden ist. Dabei kann der Wickelkörper an dem ihm zugeordneten Körper sowohl völlig fest, als auch nur drehfest als auch nur linear verschiebbar befestigt sein. Je nach der erwünschten Gelenkbewegung sind hier für die Anlagefläche die verschiedensten Querschnittskonfigurationen denkbar. Bei diesen Anwendungen wird insbesondere dann, wenn sich die Gelenkbewegung über einen Winkel erstrecken soll, der wesentlich kleiner als 360° ist, die Anlagefläche in einer Vertiefung befinden, die sich nur über einen entsprechend kurzen Teil des Umfangs der Mantelfläche des Wickelkörpers erstreckt.

Sind beide Bandenden "frei", so kann die Anordnung entweder als Gelenkverbindung von zwei oder von drei Körpern Verwendung finden. Im ersten Fall sind die beiden gelenkig miteinander zu verbindenden Körper an den beiden Bandenden befestigt und die erfindungsgemäße Führungsvorrichtung dient lediglich dazu, den Gelenkpunkt bzw. die Gelenkachse zu definieren, während im zweiten Fall die Führungsvorrichtung an dem dritten gelenkig zu verbindenden Körper befestigt ist.

Es sei ausdrücklich darauf hingewiesen, daß ein besonderer Vorteil der erfindungsgemäßen Anordnung darin gesehen wird, daß sich mit ihr nicht nur reine Drehgelenke mit einer festen Drehachse sondern auch Gelenke realisieren lassen, bei denen zusätzlich zu der Drehbewegung auch definierte translatorische Relativbewegungen zwischen den gelenkig miteinander verbundenen Körpern möglich sind.

Ein weiterer ganz entscheidender Vorteil der erfindungsgemäßen Vorrichtung liegt darin, daß, wie sich aus den obigen Beschreibungen der bevorzugten Anwendungsfälle bereits ergibt, diese Anwendungsfälle nicht notwendigerweise voneinander getrennt realisiert werden müssen. Vielmehr eröffnet sich für die erfindungsgemäße Vorrichtung ein enorm großer Anwendungsbereich auch dadurch, daß sie in "kombinierter" Weise beispielsweise gleichzeitig als Gelenk und Getriebe eingesetzt werden kann.

Weiter vervielfachen lassen sich diese Anwendungsmöglichkeiten dadurch, daß mehrere bombierte Bänder über ein und dieselbe Führungsvorrichtung geführt bzw. auf ein und denselben Wickelkörper auf- bzw. von diesem abgewickelt werden. Dies kann prinzipiell in der Weise geschehen, daß für jedes der bombierten Bänder eine eigene Gruppe von Anlage- und seitlichen Abstützflächen vorgesehen wird, wobei sowohl die Länge als auch die Form der Anlagefläche für jedes Band anders gewählt werden kann. Alternativ hierzu können auch zwei oder mehr Bänder an den gleichen seitlichen Abstützflächen eingespannt bzw. in ein und derselben Vertiefung aufgewickelt werden, wobei dann die radiale Außenfläche des jeweils inneren Bandes die Anlagefläche für das nächstäußere Band bildet.

Vorzugsweise können die eben erwähnten Möglichkeiten auch miteinander z.B. in der Weise kombiniert werden, daß auf ein und demselben Körper mehrere Flächengruppen bzw. Vertiefungen vorgesehen sind, von denen einige nur zum Führen und/oder Aufwickeln eines einzigen Bandes dienen, während durch andere Flächengruppen zwei oder mehr Bänder führbar bzw. in anderen Vertiefungen zwei oder mehr Bänder aufwickelbar sind.

Es ist klar, daß es bei all den beschriebenen Anwendungsfällen zu einer Relativbewegung zwischen dem bombierten Band und der Führungsvorrichtung in der Weise kommt, daß sich bisher mit der Führungsvorrichtung nicht in Eingriff stehende Bandabschnitte, die gemäß der Bombierung ihre "normale" Krümmung in Querrichtung besitzen, unter zumindest teilweiser Aufhebung dieser Querkrümmung und gleichzeitiger Krümmung in Längsrichtung zwischen die Anlage- und Abstützflächen einspannen und/oder daß bisher eingespannte und somit in Längsrichtung gekrümmte Bandabschnitte sich von den Anlage- und Abstützflächen abheben, wobei ihre Längskrümmung verschwindet und sie wieder ihre "normale" Querkrümmung annehmen.

Im folgenden wird das beim Eintauchen eines bisher nicht mit einem Wickelkörper in Eingriff stehenden Bandabschnittes in die Vertiefung des Wickelkörpers erfolgende Einspannen des Bandabschnittes zwischen Anlage- und Abstützflächen nochmals im einzelnen erläutert. Dabei wird zunächst davon ausgegangen, daß der Boden der Vertiefung selbst die Anlagefläche bildet, an die sich der neu eintretende Bandabschnitt anlegen soll. Solange der Bandabschnitt noch genügend weit vom Wickelkörper entfernt ist, besitzt er ausschließlich die durch seine Bombierung vorgegebene, "normale" Krümmung in Querrichtung und ist in Längsrichtung völlig geradlinig. Demgegenüber sind bereits an die Anlagefläche angepreßte Bandabschnitte in Längsrichtung gekrümmt und in Querrichtung weitgehend flachgedrückt. Es ist klar, daß in dem Bereich, in dem sich das Band tangential an die Anlagefläche annähert, am Band eine Übergangszone vorhanden ist, in welcher zur Anlagefläche hin gesehen die Querkrümmung in zunehmendem Maße schwächer wird. Die engste Querschnittsstelle der Vertiefung muß so bemessen sein, daß das noch nahezu vollständig quer gekrümmte und damit eine entsprechend geringere Breite besitzende Band ohne weiteres in die Vertiefung eintauchen und sich tangential an die Anlagefläche anlegen kann. Wenn der betrachtete Bandabschnitt in die Vertiefung eingetaucht ist, ist er in jedem Fall schon so weit in Querrichtung flachgedrückt, daß seine Seitenkanten bzw. -flächen nach unten zum Boden der Vertiefung hinweisen und er mit diesen Seitenkanten voraus auf den Boden aufsetzt. Durch die beim weiteren Anlegen des Bandabschnittes an die Anlagefläche zunehmende Längskrümmung wird die Querkrümmung immer stärker flachgedrückt und die Seitenkanten des Bandabschnittes wandern in Richtung der seitlichen Innenwände der Vertiefung nach außen. Der Abstand dieser Innenwände ist dort, wo sich die Seitenkanten des Bandabschnittes befinden, wenn seine Querkrümmung fast völlig flachgedrückt ist, etwas geringer als die Breite des vollständig flachgedrückten Bandabschnittes. Das bedeutet, daß sich gleichzeitig mit dem Anlegen des Bandabschnittes an die Anlagefläche seine Seitenkanten bzw. -flächen so zwischen den Seitenwänden der Vertiefung einspreizen, daß insgesamt eine sehr stabile und insbesondere auf Druck in Bandlängsrichtung beanspruchbare Festlegung des Bandes in der Vertiefung erfolgt.

Die bei dem eben beschriebenen Vorgang auftretenden, sehr geringen Reibungskräfte zwischen den auf dem Vertiefungsboden nach außen wandernden Band-Seitenflächen und dem Vertiefungsboden können in vorteilhafter Weise noch dadurch verringert werden, daß nicht der Boden der Vertiefung selbst sondern die Außenfläche wenigstens einer im Inneren der Vertiefung vorgesehenen Erhebung als Anlagefläche dient. Diese Erhebung wird dann so angeordnet, daß ihre Außenfläche in Band-Querrichtung nur einen Teil der Vertiefungsbreite einnimmt, so daß auf beiden Seiten der Erhebung zwischen ihr und der zugehörigen Seitenwand der Vertiefung eine sich in Längsrichtung erstreckende Rille gebildet wird. In diese beiden Rillen können dann die Seitenflächen eines in Querrichtung noch gewölbten Bandabschnittes beim Eintreten in die Vertiefung eintauchen und, bedingt durch das zunehmende Flachdrücken der Querkrümmung zu den Seitenwänden hin nach außen wandern, ohne dabei den Nutboden oder andere Teile des Wickelkörpers zu berühren. Eine Berührung mit dem Wickelkörper tritt dann in Form eines Wälzvorganges praktisch erst in dem Augenblick ein, in dem sich die Bandseitenflächen zwischen die Seitenwände der Vertiefung einspreizen.

Die oben beschriebenen und weitere vorteilhafte Ausgestaltungen der erfindungsgemäßen Vorrichtung sind in den Unteransprüchen niedergelegt.

Die Erfindung wird im folgenden anhand von Ausführungsbeispielen unter Bezugnahme auf die Zeichnung beschrieben;
in dieser zeigen:
- Fig. 1: eine perspektivische Ansicht einer ersten Ausführungsform der erfindungsgemäßen Vorrichtung, bei der ein Band mit geringer Querwölbung auf einen Wickelkörper auf- bzw. von diesem abwickelbar ist,
- Fig. 2: in vergrößertem Maßstab einen Radialschnitt durch den Wickelkörper des Ausführungsbeispiels aus Fig. 1,
- Fig. 3: einen der Fig. 2 entsprechenden Schnitt durch eine zweite Ausführungsform der erfindungsgemäßen Vorrichtung, die zur Umlenkung eines bombierten Bandes und/oder zur Umsetzung einer translatorischen in eine Drehbewegung oder umgekehrt dienen kann,
- Fig 4: in stark vergrößertem Maßstab ein Detail aus einem den Fig. 2 und 3 entsprechenden Schnitt durch ein drittes Ausführungsbeispiel, bei dem sich das Band mit einer Restwölbung zwischen den seitlichen Abstützflächen einspannt, von denen nur die linke wiedergegeben ist,
- Fig 5a und 5b: der Fig. 4 entsprechende Detail-Schnittansichten durch ein viertes und ein fünftes Ausführungsbeispiel einer erfindungsgemäßen Vorrichtung, die weitere Ausbildungsmöglichkeiten der Anlageflächen und der seitlichen Abstützflächen zeigen,
- Fig 6 a und 6b: eine den Fig. 4 und 5 entsprechende Schnitt-Detaildarstellung einer sechsten Ausführungsform einer erfindungsgemäßen Vorrichtung, bei der das bombierte Band nur an einer Seitenkante eingespannt und geführt wird,
- Fig 7: ein Ausführungsbeispiel der erfindungsgemäßen Vorrichtung, bei der der hohle Innenraum des Wickelkörpers für die Unterbringung einer Antriebsvorrichtung genutzt ist,
- Fig 8: eine perspektivische Ansicht einer achten Ausführungsform einer erfindungsgemäßen Vorrichtung, zum Auf- und Abwickeln eines stark bombierten Bandes,
- Fig 9: ein Ausführungsbeispiel, bei dem ein entsprechend geformtes bombiertes Band auf eine kegelstumpfförmige Anlagefläche auf- bzw. von dieser abgewickelt werden kann,
- Fig 10: ein Ausführungsbeispiel, bei dem ein bombiertes Band, dessen Mittelbereich länger ist als die Seitenbereiche auf eine tonnenförmige Anlagefläche auf- bzw. von dieser abgewickelt werden kann,
- Fig 11: in vergrößertem Maßstab einen quer zur Längsrichtung verlaufenden Schnitt durch den abgewickelten Teil eines bombierten Bandes ähnlich dem Band aus Fig. 8, das jedoch zur Stabilitätserhöhung mit einem Hilfsband zusammengefügt ist,
- Fig 12: ein dem bombierten Band aus den Fig. 8 und 11 ähnliches Band, das sich beim Abwickeln vom Wickelkörper zu einem rohrförmigen Querschnitt schließt, wobei sich seine Seitenkanten ineinander verzahnen,
- Fig 13: einen dem Querschnitt aus Fig.11 entsprechenden Querschnitt durch den abgewickelten Teil von zwei bombierten Bändern, die gemäß einer weiteren Ausführungsform miteinander verbunden sind,
- Fig 14: ein Ausführungsbeispiel, bei dem eine erfindungsgemäße Vorrichtung mit einem Rotationskörper und einem um den Rotationskörper herum geführten Band mit zwei "freien" Enden als Gelenk und/oder Getriebe oder Umlenkrolle Verwendung finden kann,
- Fig 15: ein Ausführungsbeispiel, bei dem zwei auf einen gemeinsamen Wickelkörper aufwickelbare Bänder mit ihren "freien" Enden an einem starren Körper angelenkt sind,
- Fig. 16: ein Anwendungsbeispiel von zwei erfindungsgemäßen Vorrichtungen in einem Plotter, die miteinander kombiniert sind, um zwei Drehbewegungen in eine ebene Bewegung mit zwei Freiheitsgraden umzusetzen, und
- Fig. 17: einen Anwendungsfall, bei dem drei erfindungsgemäße Vorrichtungen miteinander kombiniert sind, um drei Drehbewegungen in eine Bewegung mit drei Freiheitsgraden umzusetzen.

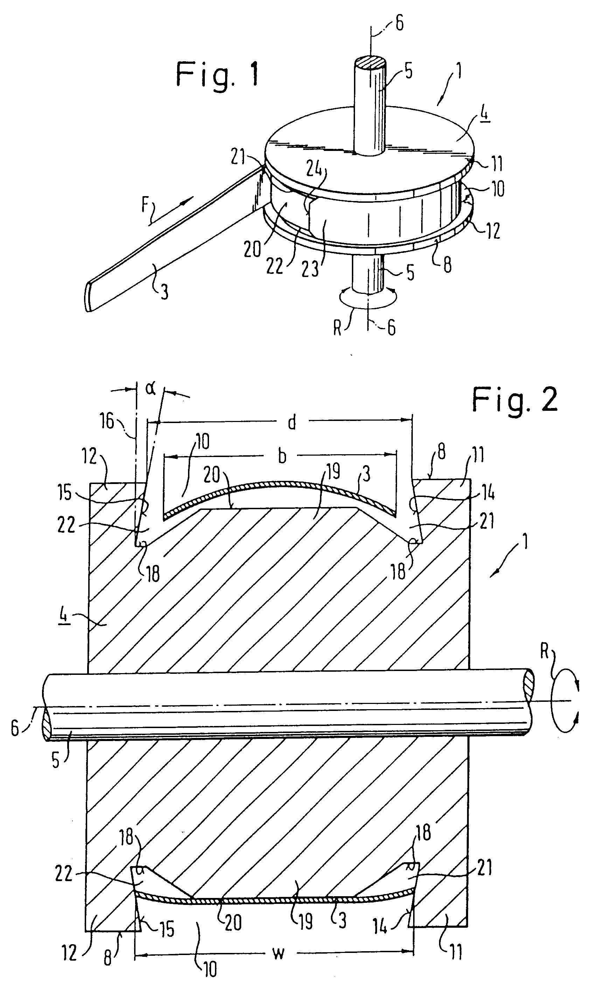

Bei dem in den Fig. 1 und 2 wiedergegebenen Ausführungsbeispiel ist die erfindungsgemäße Vorrichtung 1 zum Führen eines aus einem steifen Material bestehenden bombierten Bandes 3 ein als Wickelkörper 4 ausgebildeter Rotationskörper, der auf einer Welle 5 um eine Rotationsachse 6 in Richtung des Doppelpfeiles R drehbar angeordnet ist und der nicht nur zu einer Führung in Querrichtung und einer Abstützung in Längsrichtung sondern auch zum Auf- und Abwickeln des bombierten Bandes 3 dient.

Im vorliegenden Zusammenhang wird unter einem bombierten Band 3 ein Band aus einem steifen Material verstanden, das quer zu seiner Längsrichtung eine Wölbung aufweist, die durch Anwendung geeigneter Kräfte flachgedrückt werden kann, ohne daß das Band 3 dabei seinen Elastizitätsbereich verläßt. Das bedeutet, daß dann, wenn die Wirkung der flachdrückenden Kräfte aufhört, das Band 3 wieder zu seiner gewölbten Querschnittsform zurückkehrt, die insbesondere im oberen Teil der Fig. 2 deutlich zu sehen ist.

Bei dem in den Fig. 1 und 2 wiedergegebenen Ausführungsbeispiel besitzt der Wickelkörper 4 die Form eines geraden Kreiszylinders, in dessen äußere Mantelfläche 8 eine in Umfangsrichtung verlaufende, sich über den gesamten Umfang erstreckende Nut 10 eingearbeitet ist, die sich nahezu über die gesamte axiale Höhe des Wickelkörpers 4 erstreckt. Somit wird die axiale Ober- bzw. Unterseite des Wickelkörpers 4 jeweils von einem kreisscheibenartigen Flanschbereich 11 bzw. 12 gebildet, von denen jeder mit dem zwischen diesen Flanschbereichen liegenden Zentralbereich des Wickelkörpers 4 einstückig verbunden ist. Alternativ hierzu können diese Flanschbereiche 11 und 12 jedoch auch als entsprechend ausformte Scheiben an den Zentralteil des Wickelkörpers 4 angesetzt und mit diesem beispielsweise durch Nieten oder Schrauben verbunden sein. In diesem Fall ist es auch möglich, zumindest die über den zentralen Teil des Wickelkörpers 4 in radialer Richtung überstehenden Teile dieser Scheiben so dünn auszubilden, daß sie sich in axialer Richtung federnd voneinander weg bzw. aufeinander zu bewegen können.

Wie man insbesondere der Fig. 2 entnimmt, sind die bei dem vorliegenden Ausführungsbeispiel die seitlichen Abstützflächen 14, 15 bildenden Seitenwände der Nut 10 gegen die auf der Rotationsachse 6 senkrecht stehende Richtung, die durch eine Linie 16 angedeutet ist, um einen spitzen Winkel α, der beispielsweise in der Größenordnung von 5° bis 10° liegen kann, so geneigt, daß sie von der Rotationsachse 6 weg zur Außenfläche 8 des Wickelkörpers 4 hin konvergieren.

Allerdings ist der Winkel α nicht auf den eben angegebenen Bereich beschränkt. Prinzipiell kann er jeden Winkel zwischen 0° und 90° annehmen.

Vom Nutboden 18 erstreckt sich in radialer Richtung nach außen eine Erhebung 19, deren Umfangsfläche 20 den innersten Teil der Anlagefläche bildet, an die sich die auf den Wickelkörper 4 aufgewickelten Bandabschnitte anlegen. Die Umfangsfläche 20 ist als Mantelfläche eines geraden Spiralzylinders ausgeformt. Der Abstand eines jeden Punktes der Mantelfläche dieses Spiralzylinders von der Rotationsachse 6 ist kleiner als der Radius des die äußere Mantelfläche 8 definierenden Kreiszylinders, so daß sich die Umfangsfläche 20 im Inneren der Nut 10 befindet.

Bei dem vorliegenden Ausführungsbeispiel erstreckt sich die Umfangsfläche 20 in axialer Richtung über etwas mehr als die Hälfte der axialen Weite w, die die Nut 10 in diesem radialen Abstand von der Rotationsachse 6 besitzt. An die axialen Endpunkte der Umfangsfläche 20 anschließend fällt die Erhebung 19 zum Nutboden 18 hin ab, so daß sich im Inneren der Nut 10 auf beiden Seiten der Erhöhung 19 zwischen ihr und der jeweils angrenzenden Nut-Seitenwand eine in Umfangsrichtung verlaufende vertiefte Rille 21 bzw. 22 befindet.

Das eine Ende 23 des Bandes 3 ist im Inneren der Nut 10 so befestigt, daß es unter nahezu völliger Beseitigung seiner Querkrümmung in etwa flach an der Umfangsfläche 20 anliegt, wie dies im unteren Teil der Fig. 2 dargestellt ist. Die Endkante 24 des Bandes 3 ist in der Umfangsfläche 20 dadurch versenkt angeordnet, daß sie an die in der Mantelfläche des geraden Spiralzylinders vorhandene Stufe anschließt. Die radiale Höhe dieser Stufe ist gleich der Dicke des Bandes, so daß sich hier ein völlig glatter Übergang von der Umfangsfläche 20 auf die radial außenliegende Oberseite des Bandes 3 ergibt, die in Fortsetzung der Umfangsfläche 20 die Anlagefläche für die weiterhin aufzuwickelnden Bandabschnitte bildet.

Der untere Teil von Fig. 2 zeigt den Zustand des Bandes 3 nicht nur in dem dem Ende 23 unmittelbar benachbarten Bereich. Vielmehr liegt das Band 3 mit Ausnahme eines kurzen Übergangsbereiches, der in den Fig. 1 und 2 nicht dargestellt ist und in dem der Übergang zwischen aufgewickeltem und abgewickeltem Zustand erfolgt, so weit es auf den Wickelkörper 4 aufgewickelt ist, in der in Fig. 2 unten dargestellten Weise an der von der Erhebung 19 definierten Umfangsfläche 20 bzw. bei mehrfacher Aufwicklung an den durch die Außenseite der bereits aufgewickelten Bandabschnitte definierten weiteren Teilen der Anlagefläche an. Für die Darstellung im unteren Bereich der Fig. 2 gilt, daß das Band 3 lediglich in seinen über die Umfangsfläche 20 in axialer Richtung überstehenden Seitenkanten-Bereichen in Richtung seiner ursprünglichen Querkrümmung noch leicht zur Rotationsachse 6 hin gekrümmt ist.
Die Kräfte, die erforderlich sind, um das Band 3 entgegen seiner "normalen", durch die Bombierung erzeugten Querkrümmung weitgehend flachzudrücken, werden keineswegs ausschließlich durch die Befestigung des Bandes 3 in der Nut 10 aufgebracht. Vielmehr entstehen diese das Band 3 flachdrückenden Kräfte dadurch, daß das Band beim Aufwickeln auf den Wickelkörper 4 in einer zu seiner Querkrümmung senkrechten Richtung, d.h. in Längsrichtung gekrümmt wird, wobei der kleinste Krümmungsradius der Umfangsfläche 20 bezüglich der Rotationsachse 6 etwas größer als der Bombierradius des Bandes 3 gewählt ist. Durch diese Bemessung wird erreicht, daß sich die beim Aufwickeln des Bandes 3 in die Nut 10 einlaufenden Abschnitte des Bandes so verformen, daß sie sich glatt an die durch die Umfangsfläche 20 bzw. die entsprechende Außenfläche eines bereits aufgewickelten Bandabschnittes gebildete Anlagefläche anlegen und bei Druckbelastung des nicht aufgewickelten Bandabschnittes in Längsrichtung zum Wickelkörper 4 hin keine Neigung zeigen, in Richtung des Pfeiles F (Fig. 1) unter Knickbildung "nach hinten" vom Wickelkörper 4 weg auszubrechen und eine abstehende Bucht zu bilden. Wie man der Fig. 1 entnimmt, ist das Band 3 zu seinem nicht am Wickelkörper 4 befestigten Ende (nicht dargestellt) hin verjüngt, um für die Bandteile, die beim Aufwickeln in der Nut 10 nicht an der Umfangsfläche 20 sondern an den durch die Außenseite von bereits aufgewickelten Bandabschnitten definierten Teilen der Anlagefläche zur Anlage kommen, eine Anpassung an die radial nach außen kleiner werdende Weite der Nut 10 zu erzielen.

Wie man nämlich dem unteren Teil der Fig. 2 entnimmt, ist die Weite w der Nut 10 in dem radialen Bereich, in dem sich die Seitenflächen des an der Anlagefläche (hier: an der Umfangsfläche 20) anliegenden, in Querrichtung nahezü flac!hgedrückten Bandes 3 befinden, so bemessen, daß sie etwas kleiner als die Breite ist, die das Band 3 annehmen würde, wenn es in Querrichtung völlig flachgedrückt würde. Dadurch werden die Bandseitenflächen, die gemäß dem oberen Teil von Fig. 2 beim Einlaufen des noch in Querrichtung gekrümmten Bandes 3 in die Nut 10 zunächst in die Rillen 21, 22 eintauchen und sich dann, wenn sich das Band 3 an die Umfangsfläche 20 anlegt, zu den die seitlichen Abstützflächen 14, 15 bildenden Seitenwänden der Nut hin und radial wieder nach außen bewegen, in einem reibungsfreien Wälzvorgang radial von innen her gegen die seitlichen Abstützflächen 14 und 15 angedrückt und zwischen diesen eingespannt. Durch die zwischen den Bandseitenkanten und den seitlichen Abstützflächen 14, 15 entstehende Haftreibung ergibt sich in Verbindung mit den Haftreibungskräften zwischen der Bandunterseite und der Umfangsfläche 20 eine schlupf- und spielfreie Aufwicklung des Bandes auf den Wickelkörper 4.

Damit für Bandabschnitte, die nicht direkt auf die Umfangsfläche 20 sondern radial etwas weiter außen auf bereits aufgewickelte Bandabschnitte aufgewickelt werden, ein entsprechender Einspanneffekt möglich ist, ist die Breite des Bandes 3 durch die eben erwähnte Verjüngung an den radial nach außen kleiner werdenden Abstand der seitlichen Abstützflächen 14, 15 angepaßt.

Sind, wie weiter oben erwähnt, die überstehenden Flanschbereiche 11, 12 so ausgebildet, daß sie in axialer Richtung auseinanderfedern können, so ist eine Verjüngung des Bandes 3 zum "freien" Ende hin nicht unbedingt erforderlich.

Damit die in Längsrichtung noch geradlinigen Teile des Bandes 3 beim Aufwickeln problemlos in die Nut 10 eintauchen können, ist, wie im oberen Teil von Fig. 2 gezeigt, der kleinste Abstand d der seitlichen Abstützflächen 14, 15 größer als die Breite b des noch in Querrichtung gewölbten, einlaufenden Bandabschnittes.

Durch die beschriebene Ausbildung des Bandes 3 und des Wickelkörpers 4 sowie insbesondere der im Wickelkörper vorgesehenen Nut 10 erhält man eine Vorrichtung zur Koppelung zwischen einer Translations- und einer Rotationsbewegung, die eine äußerst spiel- und verlustarme Umsetzung zwischen diesen beiden Bewegungen ermöglicht. Die Anordnung ist in Richtung des Pfeiles F bis zur Knickgrenze des Bandes 3 druckstabil, da das Band eher einknickt, als daß es sich von seiner Auflagefläche in der Nut 10 abhebt. Dabei ist von besonderem Vorteil, daß das Einknicken des Bandes 3 reversibel ist und das Band seine ursprüngliche Form wieder annimmt, wenn die Druck-Überbeanspruchung wegfällt. Gleiches gilt auch für Überlastungen in den zur Richtung des Pfeiles F senkrechten Richtungen. In Gegenrichtung zum Pfeil F ist die Anordnung bis zur Grenze der bei Bändern ohnehin sehr hohen Zugbelastung ohne Probleme beanspruchbar.

Durch das Aufwickeln des Bandes 3 auf den Wickelkörper 4 entsteht wegen der Elastizität des bombierten Bandes ein Abwickelmoment, d.h., das Band 3 versucht, sich selbst vom Wickelkörper abzuwickeln und dabei sein "freies" Ende in Gegenrichtung zum Pfeil F zu verschieben. Verwendet man die Vorrichtung zum Umsetzen einer Dreh- in eine Linearbewegung und treibt man zu diesem Zweck den Wickelkörper 4 z.B. mit Hilfe eines Getriebes an, so genügt es, zum Abwickeln des Bandes 3 das beispielsweise elektrisch erzeugte Aufwickel-Drehmoment etwas kleiner zu machen, als das eben erwähnte, vom Band selbst erzeugte Abwickel-Drehmoment, um zu erreichen, daß im Getriebe immer die gleichen Zahnflanken aneinander anliegen. Dadurch kann das in jedem Getriebe vorhandene Zahnflanken-Spiel bei einer solchen Anordnung vollständig ausgeschaltet werden.

In Fällen, in denen das Abwickelmoment stört, kann das Band 3 zusätzlich in Längsrichtung bombiert, d.h. elastisch so vorgespannt werden, daß das hierdurch entstehende Aufwickelmoment das Abwickelmoment vermindert, ausgleicht oder sogar überkompensiert. Im letzteren Fall hat das Band die Tendenz, sich selbständig auf den Wickelkörper 4 aufzuwickeln. Eine möglichst gute gegenseitige Kompensation der beiden Wickelmomente ist dann von Vorteil, wenn sichergestellt werden soll, daß z.B. bei einem Bruch des abgewickelten Bandteiles oder der Antriebsvorrichtung keine unkontrollierten Auf- oder Abwickelbewegungen entstehen.

Darüber hinaus ist es möglich, verschiedene Bandabschnitte in Längsrichtung unterschiedlich stark bzw. nicht zu bombieren. Dadurch kann man in genau definierter Weise in Abhängigkeit davon, welche Bandabschnitte gerade auf den Wickelkörper auf- bzw. von ihm abgewickelt sind, ein Auf-oder ein Abwickelmoment bzw. ein neutrales Verhalten erzeugen, wobei die Stärke der Auf- und/oder Abwickelmomente noch zusätzlich variiert werden kann.

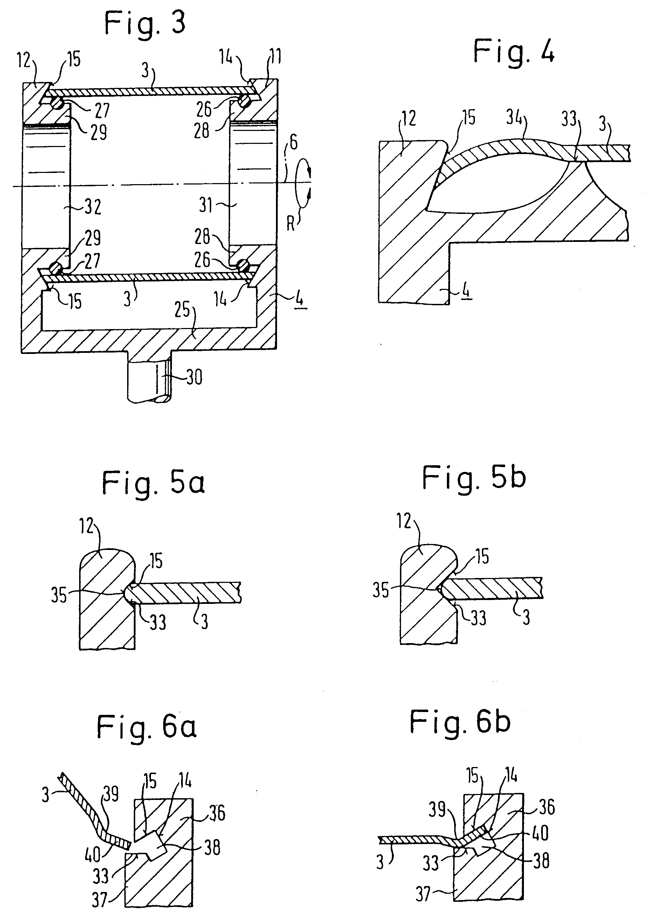

Das in Fig. 3 wiedergegebene Ausführungsbeispiel zeigt, daß es möglich ist, den inneren Teil des Rotationskörpers völlig wegzulassen, so daß nur noch die beiden Flanschbereiche 11 und 12 übrigbleiben, die hier die Form von Kreisringen besitzen, die an ihrem in Fig. 3 unteren Bereich über eine gabelförmige Struktur 25 so miteinander verbunden sind, daß sie mit einem vorgebbaren Druck aufeinander zu vorgespannt sind. Auf diese Weise können sie das Band 3 zwischen sich einspannen, das hier sowohl im oberen als auch im unteren Teil mit seinen Seitenflächen an den ringförmigen seitlichen Abstützflächen 14 und 15 anliegt, die an den aufeinander zuweisenden Flächen der Flanschbereiche 11 und 12 ausgebildet sind. Als Anlagefläche dienen hier zwei O-Ringe 26 und 27, die in axial nach innen vorspringenden Schultern 28, 29 der Flanschbereiche 11, 12 eingelassen sind. Die Anlagefläche, die die Längskrümmung des Bandes erzwingt, ist hier also in zwei Flächen aufgespalten, die von den radialen Außenseiten der O-Ringe 26, 27 gebildet werden. Durch die elastischen Eigenschaften der O-Ringe 26, 27 wird hier eine zusätzliche elastische Kraft erzeugt, die beim Einspannen der jeweiligen Bandabschnitte zwischen den Anlageflächen und den seitlichen Abstützflächen 14, 15 die Bandseitenflächen gegen diese seitlichen Abstützflächen andrückt.

Die Anordnung aus Fig. 3 kann entweder mit Hilfe des in der Figur nach unten vorstehenden Mittelzapfens 30 der gabelförmigen Struktur 25 so gelagert sein, daß sie in Richtung des Doppelpfeiles R um die körperlich nicht realisierte Achse 6 schwenkbar ist. Alternativ hierzu kann die gesamte Anordnung auch über das Band 3 selbst gehalten werden, so daß durch eine entsprechende Bewegung des Bandes 3 der Zapfen 30 um die Achse 6 herumgeschwenkt werden kann. In beiden Fällen ist der Innenraum der Struktur durch die seitlichen Öffnungen 31, 32 der Flanschbereiche 11, 12 frei zugänglich. Er kann beispielsweise zur Unterbringung eines die Anordnung in Drehung versetzenden Motors und/oder Getriebes oder dergleichen verwendet werden.

In Fig. 4 ist in stark vergrößertem Maßstab ein der linken oberen Ecke der Fig. 3 entsprechendes Detail einer etwas anders gestalteten Ausführungsform wiedergegeben. Man sieht auch hier einen Flanschbereich 12, der an seinem radial äußeren Ende die eine der beiden seitlichen Abstützflächen, nämlich die Abstützfläche 15 aufweist. Axial etwas mehr nach innen ist hier die eine von zwei Abstützflächen 33 wiedergegeben, an der das Band 3 mit seiner Unterseite in einem schmalen Bereich anliegt. Es ist hier nur der eine Seitenkantenbereich des bombierten Bandes 3 dargestellt. An der gegenüberliegenden, nicht dargestellten rechten Seitenkante ist der dortige Flanschbereich in entsprechender Weise ausgebildet. Die Abstützflächen 33 sind hier nicht elastisch. Man sieht, daß das Band mit seiner Seitenfläche auch so gegen die seitlichen Abstützflächen eingespannt werden kann, daß sich in seinem Randbereich eine konkav nach außen gerichtete Aufwölbung 34 ergibt. Das bombierte Band muß also bei seiner Einspannung zwischen den seitlichen Abstützflächen und der Auflagefläche in Querrichtung nicht völlig gestreckt sein. Es ergibt sich aber auch hier eine sehr feste und in Längsrichtung des bombierten Bandes 3 auf Druck belastbare Verbindung zwischen dem bombierten Band 3 und dem Rotationskörper 4.

In den Fig. 5a und 5b sind zwei der Fig. 4 entsprechende Detail-Schnittansichten von zwei weiteren Ausführungsformen wiedergegeben, bei denen die jeweils dargestellte linke seitliche Abstützfläche 15 und die zugehörige Anlagefläche 33 Innenwandbereiche einer Nut 35 bilden, die auf der dem gegenüberliegenden, nicht dargestellten Flanschbereich zugewandten Innenfläche des jeweils wiedergegebenen Flanschbereiches 12 ausgebildet ist. Im Fall der Fig. 5a besitzt die Nut 35 einen in etwa halbkreisförmigen Querschnitt, während sie in Fig. 5b in etwa V-förmig ausgebildet ist. Auf der jeweils nicht dargestellten gegenüberliegenden rechten Seite ist der dortige Flanschbereich mit einer entsprechenden Nut ausgestattet.

Bei den bisher beschriebenen Ausführungsbeispielen waren die beiden seitlichen Abstützflächen 14, 15 immer so weit voneinander beabstandet angeordnet, daß das bombierte Band mit seiner gesamten Breite zwischen sie eintreten und sich mit seinen Seitenflächen zwischen ihnen einspannen konnte. Bei dem in den Fig. 6a und 6b wiedergegebenen Ausführungsbeispiel wird dagegen das bombierte Band 3 nur an dem einen wiedergegebenen seitlichen Rand eingespannt, während der gegenüberliegende Randbereich völlig frei bleibt. Die erfindungsgemäße Führungsvorrichtung umfaßt hier also nur einen einzigen Halte- und Führungsteil 36, der in seiner dem Band 3 zugewandten Seitenfläche 37 eine Nut 38 aufweist, an der sowohl die Anlagefläche 33 als auch die beiden seitlichen Abstützflächen 14 und 15 ausgebildet sind. Das Band 3 besitzt an seinem dem Halte- und Führungsteil 36 zugewandten seitlichen Rand eine seiner Bombierungswölbung entgegengerichtete Aufbiegung 39, deren Krümmungsradius im Vergleich zum Wölbungsradius der Bombierung so klein ist, daß sie auch dann erhalten bleibt, wenn, wie dies Fig. 6b zeigt, die Querwölbung des Bandes 3 praktisch völlig aufgehoben ist. Auf diese Weise kann der aufgebogene Randbereich 40 aufgrund der Breitenvergrößerung, die das bombierte Band 3 bei der Aufhebung seiner Querwölbung erfährt, in die Nut 38 eintreten und sich dort zwischen der Anlagefläche 33 und den beiden seitlichen Abstützflächen 14 und 15 einspannen. Zu diesem Zweck sind die beiden seitlichen Abstützflächen 14 und 15 auch hier so ausgebildet, daß sie der Anlagefläche 33 gegenüberliegen und von dieser weg aufeinander zu konvergieren. Es ergibt sich auch hier wieder eine sehr feste und gegen Druck in Bandlängsrichtung wiederstandsfähige Verbindung zwischen dem bombierten Band 3 und dem Halte- und Führungsteil 36.

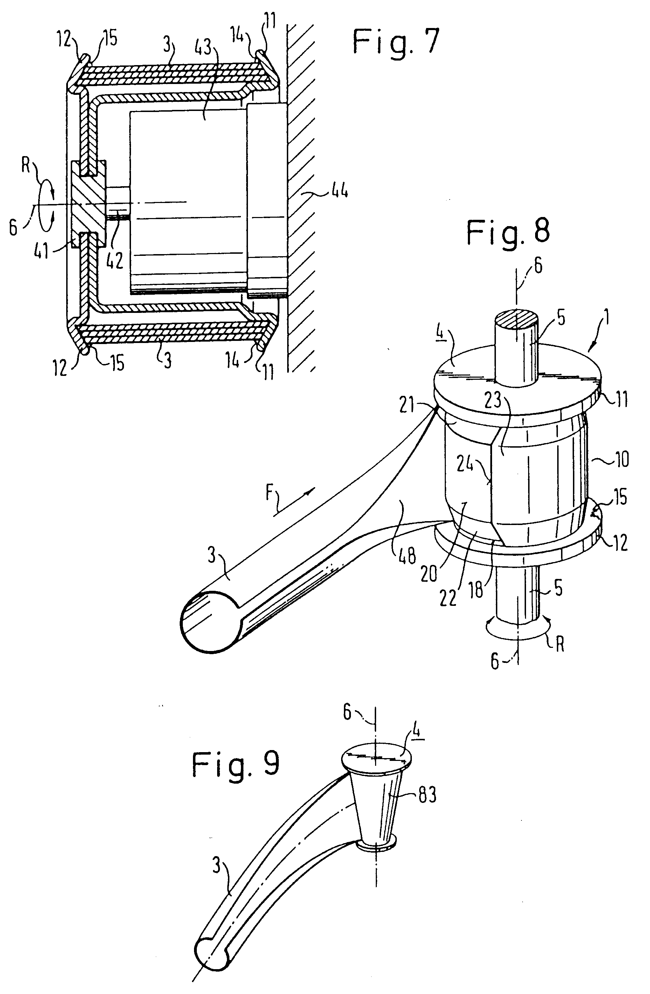

In Fig. 7 ist wieder eine Ausführungsform dargestellt, bei der das bombierte Band 3 zwischen zwei einander gegenüberliegenden Flanschbereichen eingespannt ist. Der links liegende Flanschbereich 12 ist hier in etwa kreisscheibenförmig ausgebildet, während der rechte Flanschbereich 11 die Form eines nach rechts offenen Topfes besitzt, der mit seinem Boden an der ihm zugewandten Innenfläche des linken Flanschbereiches 12 anliegt und dort mit diesem über eine Verbindungsvorrichtung 41 fest verbunden ist. Diese Verbindungsvorrichtung 41 wird von der Welle 42 einer Motor- und Getriebeanordnung 43 getragen, die im Innenraum des topfförmigen Flanschbereiches 11 untergebracht und mit ihrer in Fig. 7 rechten Seite an einem Widerlager 44 montiert ist. Der von der Verbindungsvorrichtung 41 und den beiden Flanschbereichen 11 und 12 gebildete Rotationskörper kann hier also durch den Motor 43 frei gedreht und beispielsweise dazu verwendet werden, ein bombiertes Band mehrlagig auf- bzw. abzuwickeln, wie dies die Fig. 7 zeigt. Man sieht deutlich, daß sich auch hier die Breite des bombierten Bandes über die Länge hinweg verändern muß, damit die weiter außen zwischen den seitlichen Abstützflächen 14 und 15 eingespannten Bandabschnitte sich glatt an die tiefer liegenden bereits aufgewickelten Bandabschnitte anlegen können.

In Fig. 8 ist ein Ausführungsbeispiel einer erfindungsgemäßen Vorrichtung wiedergegeben, bei der das bombierte Band 3 so weit gekrümmt ist, daß es in seinen abgewickelten Abschnitten einen nahezu kreisförmigen Querschnitt besitzt. Hierdurch kann die Biege- und Knicksteifigkeit des Bandes 3 in den zur Richtung des Pfeiles F senkrechten Richtungen und auch seine Druckbelastbarkeit in Richtung des Pfeiles F erheblich gesteigert werden. Da ein derart geformtes Band 3 beim Aufwickeln auf den Wickelkörper 4 eine erheblich stärkere Verbreiterung erfährt, als dies bei den bisher beschriebenen Ausführungsbeispielen der Fall ist, muß die Nut 10 im Wickelkörper 4 entsprechend breit dimensioniert werden. Im übrigen besitzt die in Fig. 8 wiedergegebene Ausführungsform dieselben Teile wie die Ausführungsform gemäß den Fig. 1 und 2, so daß hier dieselben Bezugszeichen verwendet werden können.

In Fig. 9 ist ein bombiertes Band 3 dargestellt, das auf einen Wickelkörper 4 auf- bzw. von diesem abwickelbar ist, dessen Anlagefläche 83 die Form der Mantelfläche eines geraden Kegelstumpfes besitzt. Auch in diesem Fall ist es nicht erforderlich, daß genau eine sich nahezu über die gesamte axiale Länge des Wickelkörpers erstreckende Anlagefläche vorgesehen ist. Stattdessen können, wie auch bei den vorausgehend beschriebenen Ausführungsbeispielen zwei oder mehr Anlageflächen vorgesehen sein, die so ausgebildet und relativ zueinander angeordnet sind, daß ein an ihnen anliegender Bandabschnitt im wesentlichen die Form zumindest eines Teils einer Kegelstumpf-Mantelfläche annimmt. Auf einen solchen Wickelkörper läßt sich allerdings nur ein bombiertes Band glatt aufwickeln, das aus einem Materialstreifen hergestellt ist, dessen Längs-Seitenränder in etwa dem Verlauf von zwei zueinander konzentrischen Kreisbögen folgen; eine Verjüngung der Bandbreite zum "freien" Ende hin ist hier in der gleichen Weise möglich, wie bei den zuvor beschriebenen Beispielen, bei denen das Band aus einem Materialstreifen hergestellt ist, dessen Längs-Seitenränder in etwa zwei zueinander parallelen Geraden folgen. Beim Abwickeln des bombierten Bandes aus Fig. 9 ergibt sich ein zumindest teiltorusförmiges Gebilde, das um eine Zentralachse gebogen ist, die auf der Rotationsachse 6 des Wickelkörpers 4 senkrecht steht.

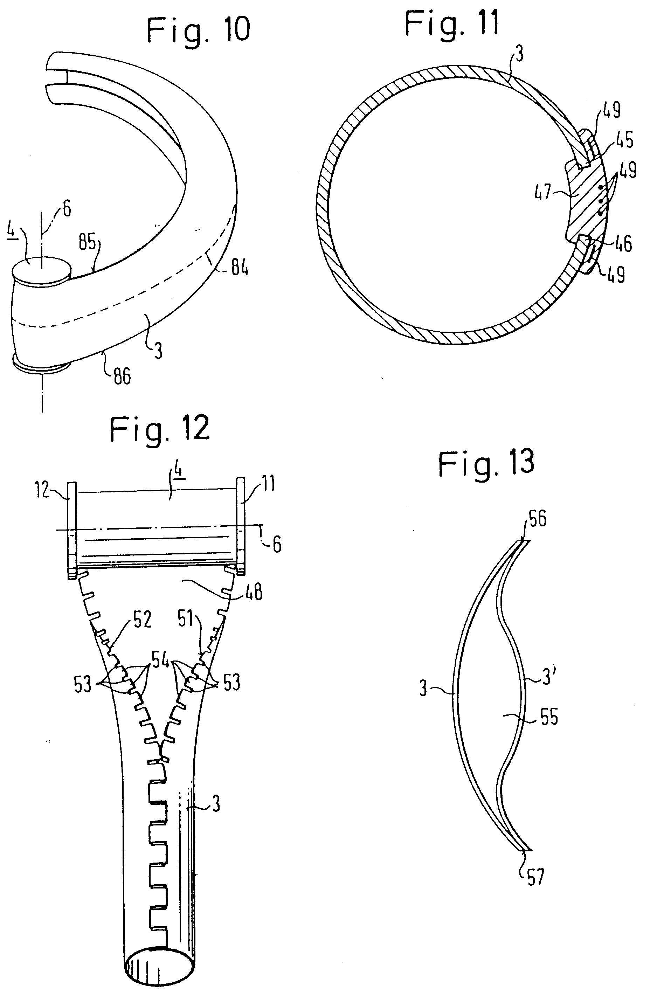

In Fig. 10 ist ein bombiertes Band 3 dargestellt, bei dem der Mittelbereich 84 durch Walzen oder eine entsprechende Bearbeitung in jedem differentiellen Bandabschnitt in Längsrichtung länger ist als die beiden zugehörigen Seitenbereiche 85, 86. Dies hat zur Folge, daß das Band 3 auf eine tonnenförmig gewölbte Anlagefläche bzw. auf Anlageflächen aufgewickelt werden muß, die eine solche tonnenförmige Gestalt der an ihnen anliegenden Bandabschnitte ermöglichen.

Auch hier ergibt sich beim Abwickeln des bombierten Bandes ein zumindest teil-torusförmiges Gebilde, dessen Zentralachse jedoch parallel zur Rotations- bzw. Symmetrieachse 6 des Wickelkörpers 4 verläuft.

Analog zu dem eben geschilderten Beispiel kann der Mittelbereich des Bandes durch entsprechende Bearbeitung auch in jedem differentiellen Bandabschnitt in Längsrichtung kürzer als die jeweils zugehörigen Seitenbereiche sein. Die Anlagefläche ist dann "kissenförmig" und der Torus bzw. Torusabschnitt, der sich beim Abwickeln des Bandes ergibt, ist zu der in Fig. 10 gezeigten Richtung entgegengesetzt gekrümmt.

Die in den Fig. 9 und 10 dargestellten Ausführungsbeispiele können mit Vorteil überall dort eingesetzt werden, wo das "freie" Bandende mit einem Körper verbunden ist, der sich aufgrund einer Drehbewegung des Wickelkörpers 4 um seine Rotationsachse 6 auf einer entsprechend gekrümmten Bahnkurve bewegen soll, wie dies z.B. beim Ausfahren von Landeklappen an Flugzeug-Tragflächen der Fall ist.

Um die Druck- und Knickstabilität des abgewickelten Bandabschnittes noch weiter zu erhöhen, ist gemäß einer weiteren Ausführungsform, für die in Fig.11 lediglich der Querschnitt durch den abgewickelten Teil des Bandes 3 wiedergegeben ist, vorgesehen, daß die "freien" Seitenkanten 45, 46 des Bandes 3 in entsprechende Ausnehmungen eines im Querschnitt in etwa H-förmigen Hilfsbandes 47 eingreifen, das sich in dem in Fig. 8 mit dem Bezugszeichen 48 bezeichneten Übergangsbereich zwischen dem abgewickelten und dem aufgewickelten Teil des Bandes 3 beim Aufwickeln aus dem in Fig. 11 wiedergegebenen Eingriff löst bzw. beim Abwickeln des Bandes 3 in diesen Eingriff eintritt. Das Hilfsband 47 kann entweder gemeinsam mit dem Band 3 auf den Wickelkörper 4 oder getrennt vom Band 3 auf einen eigenen Wickelkörper aufgewickelt werden.

Im ersten Fall kann es zweckmäßig sein, auf der Innenseite des bombierten Bandes 3 eine Beschichtung anzubringen, deren Dicke mindestens gleich der Dicke des Hilfsbandes 47 ist und die eine sich in Längsrichtung des bombierten Bandes erstreckende Ausnehmung aufweist, in die sich das Hilfsband 47 beim Aufwickeln einbettet. Hierdurch wird bei einem sehr schmalen Hilfsband 47 eine verbesserte Auflage des bombierten Bandes auf dem jeweils darunter aufgewickelten Bandabschnitt erreicht. Überdies können in der Beschichtung elektrische und/oder Druckluft-Leitungen geführt werden.

Wie Fig. 11 weiterhin zeigt, können auch im Inneren des Hilfsbandes 47 elektrisch leitende Adern 49 oder sonstige Leitungen zur Übertragung von Energie bzw. von Informationssignalen vorgesehen sein, die beispielsweise einer am "freien" Ende des Bandes 3 angebrachten Zeichen-, Schreib-oder Greifvorrichtung oder dergleichen zugeführt werden. Alternativ hierzu ist es auch möglich, für eine Energie-und/oder Signalversorgung das bombierte Band 3 und/oder das Hilfsband 47 selbst zu verwenden, wenn das betreffende Band aus einem leitfähigen Material besteht.

In Fig. 12 ist ein teilweise von einem Wickelkörper 4 abgewickeltes bombiertes Band 3 dargestellt, das so stark bombiert ist, daß sich die Seitenkantenbereiche seiner abgewickelten Abschnitte nicht nur zu einem geschlossenen Querschnitt zusammenfügen, sondern sich sogar etwas überlappen. Senkrecht zu den Bandrändern 51, 52 verlaufende Schlitze 53 unterteilen die Bandränder in Laschen 54, die abwechselnd etwas nach innen bzw. nach außen aufgebogen sind. Dabei ist von zwei einander genau gegenüberliegenden Laschen 54 immer die eine nach innen und die andere nach außen aufgebogen. Dadurch können sich diese Laschen, wie im unteren Teil der Fig. gezeigt, ineinander verschränken und somit die Stabilität der abgewickelten Bandabschnitte beträchtlich erhöhen.

In Fig. 13 ist ein der Fig.11 entsprechender Querschnitt durch einen nicht aufgewickelten Bandabschnitt einer weiteren Ausführungsform dargestellt, bei der zwei bombierte Bänder 3 und 3′ mit einander entgegengesetzten Wölbungen angeordnet und in der Nähe ihrer Seitenränder so miteinander verbunden sind, daß sie einen sich in Längsrichtung der Bandanordnung erstreckenden Hohlraum 55 umschließen. Auch eine solche Bandanordnung, die eine besonders hohe Drehsteifigkeit besitzt, läßt sich auf einem Wickelkörper aufwickeln, wobei die Querwölbungen beider Bänder 3 und 3′ gleichzeitig flachgedrückt werden.

Weiterhin läßt sich der Fig. 13 besonders deutlich entnehmen, daß die Seitenflächen 56, 57 des Bandes 3 abgeschrägt sind, um eine Anpassung an die nach innen geneigten seitlichen Abstützflächen des betreffenden Wickelkörpers zu erzielen. Eine solche Abschrägung ist auch bei den unter Bezugnahme auf die vorausgehenden Figuren beschriebenen Ausführungsbeispielen von Vorteil.

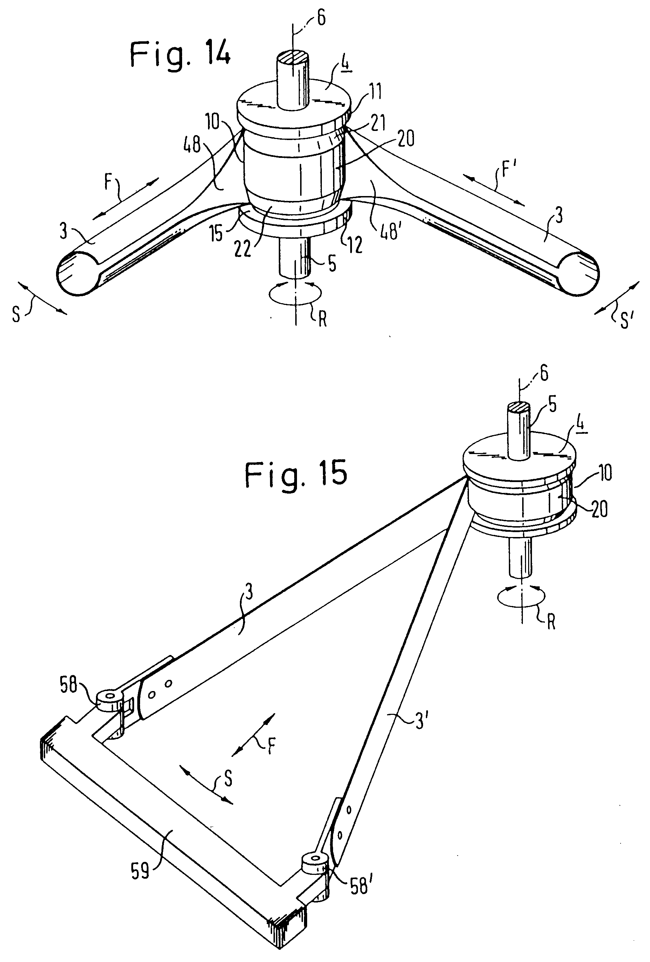

In Fig. 14 ist eine Ausführungsform dargestellt,die sich von der Ausführungsform gemäß Fig. 8 im wesentlichen dadurch unterscheidet, daß keines der Bandenden am Rotationskörper 4 festgelegt ist. Vielmehr ist das Band 3 mit einem Teil seiner Länge in der Nut 10 verlaufend um einen Teil des Umfanges der Umfangsfläche 20 herumgeführt, so daß die beiden (nicht dargestellten) Bandenden "frei" sind und von der Verwendung der Vorrichtung abhängende Bewegungen ausführen können.

Beispielsweise kann die Anordnung als Gelenkverbindung von drei Körpern dienen, von denen jeweils einer mit einem der "freien" Bandenden bzw. mit dem Rotationskörper 4 verbunden ist. Dabei kann der Rotationskörper 4 bezüglich der Rotationsachse 6 festgehalten werden. Die mit den "freien" Enden des Bandes verbundenen Körper können Schwenkbewegungen ausführen, wie dies durch die Doppelpfeile S und S′ angedeutet ist.

Eine andere Möglichkeit besteht in der Verwendung als Getriebe, bei der zwei miteinander gekoppelte translatorische Bewegungen der Bandenden in Richtung der Doppelpfeile F und F′ in eine Drehbewegung des Rotationskörpers 4 in Richtung des Doppelpfeiles R umgesetzt werden. Wird umgekehrt die Welle 5 des Rotationskörpers 4 für eine Drehbewegung angetrieben, so wird diese in zwei zueinander gegenläufige Translationsbewegungen der Bandenden umgesetzt. Auch eine Kombination von Gelenk- und Getriebeeigenschaften ist möglich.

Eine weitere Anwendungsmöglichkeit besteht darin, die beiden "freien" Enden des bombierten Bandes 3 miteinander zu verbinden, so daß das Band 3 eine endlose Schlaufe bildet, die über zwei oder mehr Querachsen läuft. Zumindest an einer der Querachsen ist dann ein Rotationskörper 4 gemäß Fig. 14 angeordnet, während an der oder den anderen Querachsen entsprechende Rotationskörper oder einfache Umlenkkörper angeordnet sein können. Eine solche Anordnung ist insbesondere als Raupenfahrwerk geeignet, wobei das bombierte Band 3 in seinen quergewölbten Abschnitten vorzugsweise keinen rohrförmigen sondern einen Querschnitt in Form eines gestreckten C aufweist.

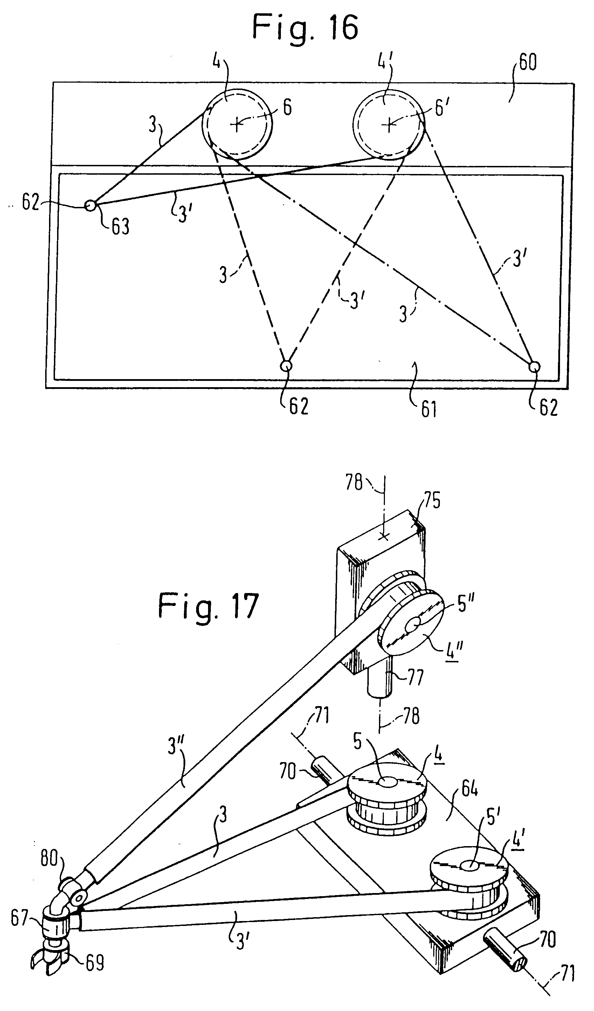

In Fig. 15 sind in der Nut 10 eines Wickelkörpers 4 zwei bombierte Bänder 3, 3′ gemeinsam aufwickelbar. Dabei bildet zunächst die Umfangsfläche 20 die Anlagefläche für das Band 3′, dessen in Fig. 15 linke Seite in den aufgewickelten Bereichen als Anlagefläche für das Band 3 dient. Werden die Bänder 3, 3′ mehrfach auf den Wickelkörper 4 aufgewickelt, bildet im weiteren Verlauf dann die in Fig. 15 linke Seite von Band 3 ihrerseits die Anlagefläche für das Band 3′.

Die "freien" Enden der Bänder 3, 3′ sind über Gelenke 58, 58′ mit einem starren Körper 59 verbunden, der bezüglich des Wickelkörpers 4 Bewegungen ausführen kann, die Komponenten sowohl in Richtung des Doppelpfeiles F als auch des Doppelpfeiles S besitzen. Die Gelenke 58, 58′ weisen Gelenkachsen auf, die parallel zur Rotationsachse 6 angeordnet sind. Dadurch wird die Torsionsfähigkeit der Bänder 3,3′ um ihre Längsrichtung aufgehoben und der starre Körper 59 kann sehr exakt in einer Ebene bewegt werden.

In Fig. 16 ist eine Draufsicht auf einen Plotter 60 dargestellt, über dessen Zeichenfläche 61 ein auf der Zeichenebene der Fig. 16 senkrecht stehender Stift 62 mit zwei Freiheitsgraden bewegbar ist. Zu diesem Zweck sind neben der Zeichenfläche 61 die Wickelkörper 4, 4′ von zwei erfindungsgemäßen Vorrichtungen so montiert, daß ihre Rotationsachsen 6, 6′ auf der Ebene der Zeichenfläche 61 senkrecht stehen. Jeder der beiden Wickelkörper 4, 4′ wird durch einen eigenen Elektromotor, der beispielsweise als Schrittmotor ausgebildet sein kann, zu einer von der Bewegung des jeweils anderen Wickelkörpers unabhängigen Drehbewegung angetrieben. Die nicht an den Wickelkörpern 4, 4′ befestigten "freien" Enden der beiden bombierten Bänder 3, 3′ sind über ein Gelenk 63 miteinander verbunden, das in ähnlicher Weise wie die Gelenke 58, 58′ aus Fig. 15 ausgebildet ist und den Zeichenstift 62 trägt. Die Länge der beiden Bänder 3, 3′ ist so bemessen, daß der Zeichenstift 62 durch eine entsprechende Ansteuerung der Elektromotoren zu jedem Punkt der Zeichenfläche 61 bewegt werden kann. Fig. 16 zeigt drei verschiedene Stellungen des Zeichenstiftes 62, wobei die Bänder 3, 3′ einmal mit durchgezogenen Linien, einmal mit gestrichelten Linien und einmal mit strichpunktierten Linien wiedergegeben sind. Man sieht ohne weiteres, daß jede der drei Stellungen durch eine entsprechende Verkürzung bzw. Verlängerung der abgewickelten Teile der Bänder 3, 3′ in jede der beiden anderen Stellungen überführbar ist.

Bei dem in Fig. 17 gezeigten Anwendungsbeispiel sind die Wickelkörper 4 und 4′ einer ersten und zweiten erfindungsgemäßen Vorrichtung auf einem Träger 64 so montiert, daß ihre Rotationswellen 5, 5′ zueinander parallel verlaufen und sich ihre bombierten Bänder 3, 3′ in einer gemeinsamen Ebene erstrecken. Auch hier sind die beiden "freien" Enden der Bänder 3, 3′ über ein Gelenk 67 miteinander verbunden, dessen Gelenkachse sich parallel zu den Rotationswellen 5, 5′ erstreckt. Das Gelenk 67 trägt einen hier als Greifer ausgebildeten Arbeitskopf 69.

Der Träger 64 ist um eine zu den Achsen der Rotationswellen 5, 5′ senkrecht verlaufende durch eine Welle 70 definierte Schwenkachse 71 schwenkbar gelagert.

Der Wickelkörper 4˝ einer dritten erfindungsgemäßen Vorrichtung ist um seine Rotationswelle 5˝ drehbar an einem zweiten Träger 75 montiert, der seinerseits um eine durch eine Welle 77 definierte Schwenkachse 78 schwenkbar ist, die auf der Richtung der Schwenkachse 71 des ersten Trägers 64 senkrecht steht. Das freie Ende des bombierten Bandes 3˝ dieser dritten Vorrichtung ist über ein weiteres Gelenk 80, dessen Gelenkachse sich senkrecht zur Achse des Gelenkes 67 erstreckt, mit den "freien" Enden der beiden anderen bombierten Bänder 3, 3′ verbunden.

Jeder der drei Wickelkörper 4, 4′ und 4˝ kann durch einen eigenen, nicht dargestellten Elektromotor zu einer von der Drehbewegung der anderen Wickelkörper unabhängigen Drehbewegung angetrieben werden. Dadurch läßt sich der Arbeitskopf 69 mit drei Freiheitsgraden über einen großen Volumenbereich hinweg verschieben. Eine solche Anordnung ist beispielsweise als Manipulator zum Anheben und Versetzen von Lasten verwendbar, wobei die maximal beförderbare Last von der Dicke, der Breite, dem Bombierradius, der Elastizität, der Querschnittsform und dem Material der Bänder 3, 3′ und 3˝ abhängt. Es kann hier ein großer Anwendungsbereich abgedeckt werden, der von Mikro-Manipulatoren bis zu Kränen reicht.

In Abwandlung bzw. Ergänzung der bisher beschriebenen Ausführungsformen ist es auch möglich, das bombierte Band zur Anpassung seiner Eigenschaften an den jeweiligen Verwendungszweck beispielsweise aus einem Verbundwerkstoff herzustellen, der unabhängig von der Bombierung, d.h. der elastischen Vorspannung in Quer- und/oder Längsrichtung anisotrop ist, d.h. in Querrichtung andere Eigenschaften besitzt als in Längs- und/oder Diagonalrichtung. Auch ist es möglich mit Hilfe des Hilfsbandes oder unabhängig davon das Band beim Austreten aus dem Eingriff mit der Anlagefläche und beim Übergang in den vollständig in Querrichtung gekrümmten Zustand in lösbarer Weise mit einen oder mehreren Versteifungskörpern, die beispielsweise von Spiralfedern gebildet sein können, zu versehen, um ihm eine erhöhte Druck- und Knickstabilität zu verleihen. Bewegen sich Bandabschnitte, die mit solchen Versteifungskörpern versehen sind, dann wieder auf eine Anlagefläche zu, so werden die Versteifungskörper bei der zunehmenden Flachbiegung der Querkrümmung freigegeben und aus der Verbindung mit dem bombierten Band gelöst. Dies kann in der Weise geschehen, daß die Versteifungskörper entweder in der Nähe des jeweiligen Wickelkörpers gesammelt und für eine Wiederverwendung bereitgehalten werden, wenn sich die Bewegungsrichtung des Bandes umgekehrt, oder daß die Versteifungskörper auf einer gesonderten Bahn um den Rotationskörper herumgeführt und mit sich vom Rotationskörper lösenden Bandabschnitten wieder in Eingriff gebracht werden. In Weiterbildung insbesondere des Ausführungsbeispiels gemäß Fig. 17 lassen sich aus jeweils einer Vielzahl von erfindungsgemäßen Vorrichtungen mehrdimensionale Fachwerke mit variablen Stablängen aufbauen. Damit können insbesondere Hebe- oder Greifvorrichtungen geschaffen werden, deren Spitze um Kanten oder Ecken herumgeführt und dort wieder in allen drei Raumrichtungen bewegt werden kann.

Abschließend sei noch auf eine Eigenschaft einer erfindungsgemäßen Vorrichtung hingewiesen, die bei entsprechenden Anwendungsfällen vorteilhaft eingesetzt werden kann. Nimmt man an, daß ein bombiertes Band teilweise auf einen Wickelkörper aufgewickelt ist, während der andere Teil, der das "freie" Ende des Bandes umfaßt, so weit abgewickelt ist, daß das Band hier seine durch die Bombierung bedingte Querschnitts-Krümmung einnimmt und sich je nach seiner sonstigen Ausbildung längs einer geraden oder einer gekrümmten Längsachse erstreckt, so kann der Wickelkörper um eine zu seiner Rotationsachse senkrechte Achse dadurch gedreht werden, daß das "freie" Bandende um die BandLängsachse verdreht wird. Man hat also zusätzlich zu der durch das Auf- und Abwickeln des Bandes auf den bzw. von dem Wickelkörper definierten Linearbewegung einen weiteren "Freiheitsgrad", da auch umgekehrt ein Drehen des Wickelkörpers um die zu seiner Rotationsachse senkrechte Achse eine entsprechende Verdrehung des Bandendes um die Band-Längsachse zur Folge hat.

## Patentansprüche

1. Vorrichtung (1) zum Führen eines aus einem steifen Material bestehenden Bandes (3; 3'), das in der Weise bombiert, d.h. elastisch vorgespannt ist, daß es zumindest eine um seine Längsachse gekrümmte Querwölbung besitzt, so daß seine eine breite Seitenfläche konvex und die andere konkav geformt ist, wobei die Vorrichtung (1) folgende Bestandteile aufweist:
- Wenigstens eine Anlagefläche (20; 26, 27; 33), an der zumindest ein Abschnitt des Bandes (3; 3') so anliegt, daß das Band (3; 3') in diesem Abschnitt unter elastischer Aufhebung der Querwölbung eine um wenigstens eine Querachse (6) gekrümmte Längswölbung aufweist, und
- zwei seitliche Abstützflächen (14, 15), die in Richtung der Querachse (6) voneinander beabstandet angeordnet und so aufeinander zugeneigt sind, daß sie von der Querachse (6) weg konvergieren, so daß jeder Bandabschnitt, der in den längs gewölbten Bereich eintritt und aufgrund der Breitenvergrößerung, die er bei der hierbei erfolgenden Verminderung seiner Querwölbung erfährt, mit diesen Abstützflächen (14, 15) in Eingriff tritt, dadurch **gekennzeichnet,** daß die Zuordnung zwischen dem bombierten Band (3; 3') und der wenigstens einen Anlagefläche (20; 26, 27; 33) so gewählt ist, daß in längsgewölbten Bandabschnitten die gleiche breite Seitenfläche des Bandes (3; 3') konvex geformt ist wie in quer gewölbten Bandabschnitten, wodurch das Ineingrifftreten des Bandes (3; 3') mit den Abstützflächen (14, 15) als schlupffreier Wälzvorgang erfolgt und sich das Band (3; 3') in elastisch reversibler Weise unverrückbar zwischen der wenigstens einen Anlagefläche (20; 26, 27; 33) und den zwei seitlichen Abstützflächen (14, 15) einspannt.

2. Vorrichtung nach Anspruch 1, dadurch **gekennzeichnet,** daß die Anlagefläche (26, 27) und/oder die Abstützflächen (14, 15) elastisch federnd ausgebildet sind.

3. Vorrichtung nach Anspruch 1 oder 2, dadurch **gekennzeichnet,** daß die wenigstens eine Anlagefläche so ausgebildet und angeordnet ist, daß ein Abschnitt des Bandes, der an ihr anliegt, die Form zumindest eines Teils der Mantelfläche eines Kreiszylinders oder eines Spiralzylinders oder eines Kegelstumpfes besitzt.

4. Vorrichtung nach Anspruch 1 oder 2, dadurch **gekennzeichnet,** daß der Mittelbereich des bombierten Bandes in Längsrichtung abschnittsweise länger oder kürzer ist als die Seitenränder und daß die wenigstens eine Anlagefläche so ausgebildet ist, daß ein Abschnitt des Bandes, der an ihr anliegt, die Form zumindest eines Teils einer im Querschnitt tonnenförmigen bzw. kissenförmigen Fläche besitzt.

5. Vorrichtung nach einem oder mehreren der Ansprüche 1 bis 4, dadurch **gekennzeichnet,** daß sie für mehrere Bänder (3; 3') seitliche Abstützflächen (14, 15) und jeweils wenigstens eine Anlagefläche umfaßt.

6. Vorrichtung nach einem oder mehreren der vorhergehenden Ansprüche, dadurch **gekennzeichnet,** daß die beiden seitlichen Abstützflächen (14, 15) so voneinander beabstandet angeordnet sind, daß ein in Querrichtung noch gekrümmter Abschnitt des Bandes (3) zwischen sie eintreten kann, um sich dann bei der elastischen Verminderung der Querwölbung mit seinen beiden Seitenflächen zwischen den Abstützflächen (14, 15) einzuspannen.

7. Vorrichtung nach Anspruch 6, dadurch **gekennzeichnet,** daß die schmalen Band-Seitenflächen (56, 57) so ausgebildet sind, daß beim Einspannvorgang zuerst der Bereich jeder schmalen Band-Seitenfläche, der sich ausgehend von der Mitte der Banddicke zu der näher bei der Querachse (6) liegenden Band-Unterseite erstreckt, mit der zugehörigen Abstützfläche (14, 15) in Eingriff tritt.

8. Vorrichtung nach einem oder mehreren der Ansprüche 1 bis 5, dadurch **gekennzeichnet,** daß das Band (3) an wenigstens einem seiner beiden Längsränder eine der Krümmung der Querwölbung entgegen gekrümmte Aufbiegung (39) aufweist, die bei der elastischen Verminderung der Querkrümmung eines Bandabschnittes erhalten bleibt, und daß die beiden seitlichen Abstützflächen (14, 15) und die Anlagefläche (33) im Bereich dieses Band-Längsrandes so angeordnet sind, daß sie die Begrenzungsflächen einer Nut (38) bilden, in die sich der an die Aufbiegung (39) nach außen hin anschließende Randbereich (40) beim elastischen Aufheben der Querwölbung des Bandes (3) hineinbewegt, um sich dort einzuspannen.

9. Vorrichtung nach einem oder mehreren der Ansprüche 1 bis 7, dadurch **gekennzeichnet,** daß die Vorrichtung (1) zum Führen des bombierten Bandes einen Rotationskörper umfaßt, dessen Symmetrieachse von der Querachse (6) gebildet wird und sich quer zur Längsrichtung des Bandes (3; 3') erstreckt und an dem die wenigstens eine Anlagefläche (20; 26, 27; 33) und die seitlichen Abstützflächen (14, 15) ausgebildet sind.

10. Vorrichtung nach Anspruch 8, dadurch **gekennzeichnet,** daß die Vorrichtung (1) zum Führen eines bombierten Bandes einen Rotationskörper umfaßt, dessen Symmetrieachse von der Querachse (6) gebildet wird und sich quer zur Längsrichtung des Bandes (3) erstreckt, und an dem die wenigstens eine Anlagefläche (33) und die seitlichen Abstützflächen (14, 15) ausgebildet sind, und daß der Rotationskörper von einer Scheibe (36) gebildet wird, in deren einen Flachseite (37) eine zur Symmetrieachse konzentrische Nut (38) ausgebildet ist, deren Begrenzungsflächen zum Teil von der Anlagefläche (33) und den beiden seitlichen Abstützflächen (14, 15) gebildet werden.

11. Vorrichtung nach Anspruch 9, dadurch **gekennzeichnet,** daß in der Mantelfläche (8) des Rotationskörpers eine Vertiefung (10) ausgebildet ist, in der sich zumindest ein Teil der Anlagefläche (20) befindet und deren Seitenwände die seitlichen Abstützflächen (14, 15) umfassen.

12. Vorrichtung nach Anspruch 9, dadurch **gekennzeichnet,** daß der Rotationskörper zwei in Richtung der Symmetrieachse voneinander beabstandete Scheiben (11, 12) umfaßt, von denen jede auf ihrer der jeweils anderen Scheibe (11, 12) zugewandten Flachseite eine der beiden seitlichen Abstützflächen (14, 15) aufweist, und daß an wenigstens einer der beiden Scheiben (11, 12) auf ihrer der anderen Scheibe (11, 12) zugewandten Flachseite eine Anlagefläche (26, 27) ausgebildet ist.

13. Vorrichtung nach einem oder mehreren der Ansprüche 9, 11 oder 12, dadurch **gekennzeichnet,** daß der Rotationskörper (4) um seine quer zur Längsrichtung des Bandes verlaufende Symmetrieachse drehbar gelagert ist.

14. Vorrichtung nach einem oder mehreren der Ansprüche 1 bis 7, dadurch **gekennzeichnet,** daß die Vorrichtung (1) zum Führen eines bombierten Bandes einen Wickelkörper (4) umfaßt, an dem das eine Ende (23) des Bandes (3) so befestigt ist, daß der sich hieran anschließende Endabschnitt des Bandes (3) an der Anlagefläche anliegt und mit wenigstens einem seiner Randbereiche zwischen den seitlichen Abstützflächen (14, 15) eingespannt ist und daß bei einer Mehrfachaufwicklung des Bandes (3) die Anlagefläche zunächst von einer Fläche des Wickelkörpers und dann von der Außenfläche von bereits aufgewickelten Bandabschnitten gebildet wird.

15. Vorrichtung nach Anspruch 14, dadurch **gekennzeichnet,** daß sich das Band (3) von dem Ende (23), mit dem es am Wickelkörper (4) befestigt ist, zum anderen Ende hin verjüngt.

16. Vorrichtung nach Anspruch 14 oder 15, dadurch **gekennzeichnet,** daß das Band (3) zusätzlich zu seiner Bombierung in Querrichtung auch in Längsrichtung bombiert ist, und daß die durch die beiden Bombierungen erzeugten Federkonstanten zur Erzielung eines vorgebbaren Auf- bzw. Abwickelmomentes bzw. zur gegenseitigen Kompensation aufeinander abgestimmt sind.

17. Vorrichtung nach Anspruch 16, dadurch **gekennzeichnet,** daß der Betrag und/oder das Vorzeichen der durch die Bombierung in Längsrichtung erzeugten Federkonstante über die Länge des Bandes (3) variabel ausgebildet ist.

18. Vorrichtung nach einem oder mehreren der Ansprüche 14 bis 17, dadurch **gekennzeichnet,** daß der Wickelkörper (4) zwei in Richtung der Symmetrieachse voneinander beabstandete Scheiben (11, 12) umfaßt, von denen jede auf ihrer der jeweils anderen Scheibe (11, 12) zugewandten Flachseite eine der beiden seitlichen Abstützflächen (14, 15) aufweist und daß an wenigstens einer der beiden Scheiben (11, 12) auf ihrer der anderen Scheibe (11, 12) zugewandten Flachseite eine Anlagefläche (26, 27) ausgebildet ist.

19. Vorrichtung nach einem oder mehreren der Ansprüche 14 bis 18, dadurch **gekennzeichnet,** daß der Wickelkörper (4) um seine quer zur Längsrichtung des Bandes verlaufende Symmetrieachse drehbar gelagert ist.

20. Vorrichtung nach einem oder mehreren der vorhergehenden Ansprüche, dadurch **gekennzeichnet,** daß das Band (3) in wenigstens einem Abschnitt, der nicht an der Anlagefläche anliegt, in lösbarer Weise mit wenigstens einem Versteifungskörper (47) verbunden ist, der beim Anlegen des Bandabschnittes an die Anlagefläche vom Bandabschnitt getrennt und beim Abheben des Bandabschnittes von der Anlagefläche mit diesem wieder verbunden wird.

## Claims

1. Apparatus (1) for guiding a strip (3; 3') which comprises a stiff material and which is cambered, that is to say elastically prestressed, in such a way that it has at least one transverse curvature which is curved about its longitudinal axis so that its one wide side surface is convexly shaped and the other is concavely shaped, wherein the apparatus (1) has the following components:
- at least one contact surface (20; 26, 27; 33) against which at least one portion of the strip (3; 3') lies in such a way that in that portion the strip (3; 3') has a longitudinal curvature which is curved about at least one transverse axis (6), with the transverse curvature being elastically removed, and
- two lateral support surfaces (14, 15) which are arranged at a spacing from each other in the direction of the transverse axis (6) and which are so inclined towards each other that they converge away from the transverse axis (6) so that each strip portion which passes into the longitudinally curved region comes into engagement with said support surfaces (14, 15), by virtue of the increase in width which the strip experiences upon the reduction in its transverse curvature which occurs in that case, characterised in that the association between the cambered strip (3; 3') and the at least one contact surface (20; 26, 27; 33) is so selected that in the longitudinally curved strip portions the same wide side surface of the strip (3; 3') is convexly shaped as in transversely curved strip portions, whereby the engagement of the strip (3; 3') with the support surfaces (14, 15) occurs in the form of a slip-free rolling operation and the strip (3; 3') is gripped immovably in an elastically reversible fashion between the at least one contact surface (20; 26, 27; 33) and the two lateral support surfaces (14, 15).

2. Apparatus according to claim 1 characterised in that the contact surface (26, 27) and/or the support surfaces (14, 15) are of an elastically resilient nature.

3. Apparatus according to claim 1 or claim 2 characterised in that the at least one contact surface is of such a configuration and arrangement that a portion of the strip which bears thereagainst is in the shape of at least a part of the peripheral surface of a circular cylinder or a spiral cylinder or a truncated cone.

4. Apparatus according to claim 1 or claim 2 characterised in that the central region of the cambered strip is longer or shorter in a portion-wise manner in the longitudinal direction than the side edges and that the at least one contact surface is such that a portion of the strip which bears thereagainst is in the shape of at least a part of a surface which is of a barrel-like or cushion-like cross-section.

5. Apparatus according to one or more of claims 1 to 4 characterised in that it has lateral support surfaces (14, 15) and at least one respective contact surface, for a plurality of strips (3; 3').

6. Apparatus according to one or more of the preceding claims characterised in that the two lateral support surfaces (14, 15) are arranged at a spacing from each other such that a portion of the strip (3) which is still curved in the transverse direction, can enter between the in order then upon the elastic reduction in the transverse curvature to be gripped with its two side surfaces between the support surfaces (14, 15).

7. Apparatus according to claim 6 characterised in that the narrow strip side surfaces (56, 57) are such that in the gripping operation firstly the region of each narrow strip side surface which extends from the centre of the strip thickness to the strip underside which is closer to the transverse axis (6) comes into engagement with the associated support surface (14, 15).

8. Apparatus according to one or more of claims 1 to 5 characterised in that at at least one of its two longitudinal edges the strip (3) has a bend portion (39) which is curved in opposite relationship to the curvature of the transverse curvature and which is retained when the transverse curvature of a strip portion is elastically reduced, and that the two lateral support surfaces (14, 15) and the contact surface (33) are so arranged in the region of said longitudinal edge of the strip that they form the boundary surfaces of a groove (38) into which moves the edge region (40) which adjoins the bend portion (39) in an outward direction, upon elastic removal of the transverse curvature of the strip (3), in order to be gripped there.

9. Apparatus according to one or more of claims 1 to 7 characterised in that for guiding the cambered strip the apparatus (1) includes a rotary body whose axis of symmetry is formed by the transverse axis (6) and extends transversely with respect to the longitudinal direction of the strip (3; 3') and on which the at least one contact surface (20; 26, 27; 33) and the lateral support surfaces (14, 15) are provided.

10. Apparatus according to claim 8 characterised in that for guiding a cambered strip the apparatus (1) has a rotary body whose axis of symmetry is formed by the transverse axis (6) and extends transversely with respect to the longitudinal direction of the strip (3) and on which the at least one contact surface (33) and the lateral support surfaces (14, 15) are provided, and that the rotary body is formed by a disc (36), in the one flat side (37) of which is provided a groove (38) which is concentric with respect to the axis of symmetry and whose boundary surfaces are formed in part by the contact surface (33) and the two lateral support surfaces (14, 15).

11. Apparatus according to claim 9 characterised in that provided in the peripheral surface (8) of the rotary body is a recess (10) in which at least a part of the contact surface (20) is disposed and the side walls of which include the lateral support surfaces (14, 15).

12. Apparatus according to claim 9 characterised in that the rotary body includes two discs (11, 12) which are spaced from each other in the direction of the axis of symmetry and each of which has on its flat side towards the respective other disc (11, 12) one of the two lateral support surfaces (14, 15), and that a contact surface (26, 27) is provided on at least one of the two discs (11, 12) on its flat side which is towards the other disc (11, 12).

13. Apparatus according to one or more of claims 9, 11 and 12 characterised in that the rotary body (4) is mounted rotatably about its axis of symmetry which extends transversely with respect to the longitudinal direction of the strip.

14. Apparatus according to one or more of claims 1 to 7 characterised in that for guiding a cambered strip the apparatus (1) includes a winding body (4) to which the one end (23) of the strip (3) is so secured that the adjoining end portion of the strip (3) bears against the contact surface and is gripped with at least one of its edge regions between the lateral support surfaces (14, 15), and that in a multiple winding of the strip (3) the contact surface is formed firstly by a surface of the winding body and then by the outside surface of strip portions which have already been wound on.

15. Apparatus according to claim 14 characterised in that the strip (3) tapers from the end (23) with which it is fixed to the winding body (4) towards the other end.

16. Apparatus according to claim 14 or claim 15 characterised in that the strip (3), in addition to its camber in the transverse direction, is also cambered in the longitudinal direction, and that the spring constants produced by the two camberings are matched to each other to produce a predeterminable winding-on and unwinding moment or for mutual compensation.

17. Apparatus according to claim 16 characterised in that the magnitude and/or the sign of the spring constant produced by the cambering in the longitudinal direction is variable over the length of the strip (3).

18. Apparatus according to one or more of claims 14 to 17 characterised in that the winding body (4) has two discs (11, 12) which are spaced from each other in the direction of the axis of symmetry and each of which has one of the two lateral support surfaces (14, 15) on its flat side which is towards the respective other disc (11, 12), and that a contact surface (26, 27) is provided on at least one of the two discs (11, 12) on its flat side which is towards the other disc (11, 12).

19. Apparatus according to one or more of claims 14 to 18 characterised in that the winding body (4) is mounted rotatably about its axis of symmetry which extends transversely to the longitudinal direction of the strip.

20. Apparatus according to one or more of the preceding claims characterised in that in at least one portion which does not bear against the contact surface the strip (3) is releasably connected to at least one stiffening body (47) which is separated from the strip portion when the strip portion bears against the contact surface and which is joined to the strip portion again when the strip portion lifts away from the contact surface.

## Revendications

1. Dispositif (1) pour le guidage d'une bande (3, 3') constituée en un matériau rigide qui est bombé, c'est à dire précontraint élastiquement de telle manière qu'elle présente au moins une courbure transversale courbée autour de son axe longitudinal, de telle sorte qu'une de ces surfaces latérale larges est formée de manière convexe et que l'autre est formée de manière concave, le dispositif (1) comprenant les parties constitutives suivantes :
- au moins une surface de contact (20 ; 26, 27 ; 33), contre laquelle est appliquée au moins une section de la bande (3, 3') de telle sorte que la bande (3, 3') dans cette section, par suppression élastique de la courbure transversale présente une courbure longitudinale courbée autour d'au moins un axe transversal (6), et
- deux surfaces d'appui latérales (14, 15) qui sont disposées en éloignement l'une de l'autre dans la direction de l'axe transversal (6) et qui sont dirigées l'une vers l'autre de telle sorte qu'elles convergent à partir de l'axe transversal (6) de sorte que chaque section de bande, qui pénètre dans la zone courbée longitudinalement et en raison de l'augmentation de la largeur qu'elle subit ici de part la diminution de sa courbure transversale, vient en prise avec lesdites surfaces d'appui (14, 15), caractérisé en ce que l'association entre la bande bombée (3 ; 3') et ladite au moins une surface de contact (20 ; 26, 27 ; 33) est choisie de telle sorte que dans les sections de bande courbée longitudinalement, la même surface latérale large de la bande (3 ; 3') est formée de manière convexe comme dans les sections de bande courbée transversalement, d'où il en résulte que la mise en prise de la bande (3 ; 3') avec les surfaces d'appui (14, 15) est réalisée sous la forme d'un processus de roulement sans glissement et que la bande (3, 3') est encastrée fixement de manière élastiquement réversible entre ladite au moins une surface de contact (20 ; 26, 27 ; 33) et les deux surfaces d'appui latérales (14, 15).

2. Dispositif selon la revendication 1, caractérisé en ce que les surfaces de contact (26, 27) et/ou les surfaces d'appui (14, 15) sont réalisées de manière élastique.

3. Dispositif selon la revendication 1 ou 2, caractérisé en ce que ladite au moins une surface de contact est réalisée et disposée de telle sorte qu'une section de la bande, qui est appliquée contre elle, présente la forme d'au moins une partie de la surface d'enveloppe d'un cylindre circulaire ou d'un cylindre spiralé ou d'un tronc de cône.

4. Dispositif selon la revendication 1 ou 2, caractérisé en ce que la zone du milieu de la bande bombée dans la direction longitudinale est plus longue ou plus courte section par section que les bords latéraux et que ladite au moins une surface de contact est réalisée de telle sorte qu'une section de la bande qui est appliquée contre elle présente la forme d'au moins une partie d'une surface en forme de barillet ou en forme de coussin en section transversale.

5. Dispositif selon une ou plusieurs des revendications 1 à 4, caractérisé en ce qu'il comprend des surfaces d'appui latérales (14, 15) et respectivement au moins une surface de contact pour plusieurs bandes (3 ; 3').

6. Dispositif selon une ou plusieurs des revendications précédentes, caractérisé en ce que les deux surfaces d'appui latérales (14, 15) sont disposées en écartement l'une de l'autre de telle sorte qu'une section de bande (3) encore plus courbée dans la direction transversale peut être formée entre elles, pour s'encastrer ensuite lors de la diminution élastique de la courbure transversale avec ses deux surfaces latérales entre les surfaces d'appui (14, 15).

7. Dispositif selon la revendication 6, caractérisé en ce que les surfaces latérales de bande étroites (56,57) sont réalisés de telle sorte que lors du processus d'encastrement d'abord la zone de chaque surface latérale de bande étroite, qui s'étend à partir de la moitié de l'épaisseur de bande vers le côté inférieur de la bande situé plus à proximité de l'axe transversal (6), vient en prise avec les surfaces d'appui correspondantes (14, 15).

8. Dispositif selon une ou plusieurs des revendications 1 à 5, caractérisé en ce que la bande (3) sur au moins un de ces bords longitudinaux présente un pli (39) courbé dans le sens opposé à la courbure transversale, qui subsiste lors de la diminution élastique de la courbure transversale d'une section de bande, et en ce que les deux surfaces d'appui latérales (14, 15) et la surface de contact (33) dans la zone de ce bord longitudinal de bande sont disposées de telle sorte qu'elles forment les surfaces limites d'une rainure (38), dans laquelle pénètre la zone de bord (40) reliée vers l'extérieur au pli (39) lors de la suppression élastique de la courbure transversale de la bande (3), pour s'y encastrer.

9. Dispositif selon une ou plusieurs des revendications 1 à 7, caractérisé en ce que le dispositif (1) pour le guidage de la bande bombée comprend un corps rotatif, dont l'axe de symétrie est formé par l'axe transversal (6) et qui s'étend transversalement à la direction longitudinale de la bande (3 ; 3') et sur lequel sont réalisées ladite au moins une surface de contact (20 ; 26, 27 ; 33) et les surfaces d'appui latérales (14, 15).

10. Dispositif selon la revendication 8, caractérisé en ce que le dispositif (1) pour le guidage d'une bande bombée comprend un corps rotatif, dont l'axe de symétrie est formé par l'axe transversal (6) et qui s'étend transversalement à la direction longitudinale de la bande (3), et sur lequel sont réalisées ladite au moins une surface de contact (33) et les surfaces d'appui latérales (14, 15), et en ce que le corps rotatif est formé par un disque (36), dans une face plane (37) duquel est réalisé une rainure (38) concentrique à l'axe de symétrie, dont les surfaces limites sont formées en partie par la surface de contact (33) et les deux surfaces d'appui latérales (14, 15).

11. Dispositif selon la revendication 9, caractérisé en ce que dans la surface d'enveloppe (8) du corps rotatif est formé un évidement (10) dans lequel se trouve au moins une partie de la surface de contact (20) et dont les parois latérales comprennent le surfaces d'appui latérales (14, 15).

12. Dispositif selon la revendication 9, caractérisé en ce que le corps rotatif comprend deux disques (11, 12) en éloignement l'un de l'autre dans la direction de l'axe de symétrie, dont chacun présente sur sa face plane tournée vers l'autre disque correspondant (11, 12) une des deux surfaces latérales (14, 15), et en ce que sur au moins un des deux disques (11, 12) sur sa face plane tournée vers l'autre disque (11, 12) est réalisée une surface de contact (26, 27).

13. Dispositif selon une ou plusieurs des revendications 9, 11 ou 12, caractérisé en ce que le corps rotatif (4) est monté rotatif autour de son axe de symétrie s'étendant transversalement par rapport à la direction longitudinale de la bande.

14. Dispositif selon une ou plusieurs des revendications 1 à 7, caractérisé en ce que le dispositif (1) pour le guidage d'une bande bombée comprend un corps de bobinage (4), auquel est fixée une extrémité (23) de la bande (3) de telle sorte que la section d'extrémité de la bande qui s'y raccorde s'applique contre la surface d'appui et est encastrée avec au moins une de ces zones de bord en les deux surfaces d'appui latérales (14, 15) et en ce que lors d'un enroulement multiple de la bande (3) la surface de contact est d'abord formée par une surface du corps de bobinage et ensuite par la surface extérieure des sections de bande déjà enroulées.

15. Dispositif selon la revendication 14, caractérisé en ce que la bande (3) se rétrécit à partir de l'extrémité (23), avec laquelle elle est fixée au corps de bobinage (4), vers l'autre extrémité.

16. Dispositif selon la revendication 14 ou 15, caractérisé en ce que la bande (3), en plus de son bombage dans la direction transversale, est également bombée dans la direction longitudinale, et en ce que les constantes élastiques obtenues par les deux bombages sont déterminées l'une par rapport à l'autre pour une compensation mutuelle afin d'obtenir un moment d'enroulement respectivement de déroulement qui peut être prédéterminé.

17. Dispositif selon la revendication 16, caractérisé en ce que la valeur et/ou le signe des constantes élastiques obtenues par le bombage dans la direction longitudinale sont variables sur la longueur de la bande (3).

18. Dispositif selon une ou plusieurs des revendications 14 à 17, caractérisé en ce que le corps de bobinage (4) comprend deux disques (11, 12) en éloignement l'un de l'autre dans la direction de l'axe de symétrie, dont chacun présente sur son côté plat tourné vers l'autre disque respectif (11, 12) une des deux surfaces d'appui latérales (14, 15) et en ce que sur au moins un des deux disques (11, 12) sur sa face plane tournée vers l'autre disque (11, 12) est formée une surface de contact (26, 27).

19. Dispositif selon une ou plusieurs des revendications 14 à 18, caractérisé en ce que le corps de bobinage (4) est monté rotatif autour de son axe de symétrie s'étendant transversalement par rapport à la direction longitudinale de la bande.

20. Dispositif selon une ou plusieurs des revendications précédentes, caractérisé en ce que la bande (3), dans au moins une section, qui n'est pas appliquée contre la surface de contact, est reliée de manière détachable avec au moins un corps de renforcement (47), qui lors de l'application de la section de bande contre la surface de contact est séparé de la section de bande et qui lors du retrait de la section de bande de la surface de contact est reliée à nouveau avec celle-ci.
